# EUROPEAN PATENT SPECIFICATION

(11) **EP 4 148 932 B1**
(45) Date of publication and mention of the grant of the patent: **27.08.2025**
(21) Application number: 21813543.2
(22) Date of filing: 14.05.2021
(51) Int. Cl.: H02J 1/08, H02M 3/158, G06F 1/26, H02J 1/10, H02M 1/00, H02J 13/00

(54) **POWER SUPPLY DEVICE AND POWER SUPPLY METHOD**
STROMVERSORGUNGSVORRICHTUNG UND STROMVERSORGUNGSVERFAHREN
DISPOSITIF ET PROCÉDÉ D'ALIMENTATION ÉLECTRIQUE

(30) Priority: 26.05.2020 CN 202010457682
(43) Date of publication of application: 15.03.2023
(73) Proprietor: Huawei Digital Power Technologies Co., Ltd., Shenzhen, Guangdong 518043 (CN)
(72) Inventor: WU, Yukun, Shenzhen, Guangdong 518129 (CN); CHENG, Jiebin, Shenzhen, Guangdong 518129 (CN)
(74) Representative: Maiwald GmbH
(86) International application number: PCT/CN2021/093938
(87) International publication number: WO 2021/238686

(56) References cited:
- CN-A- 101 630 918
- CN-A- 102 611 186
- CN-A- 104 659 858
- CN-A- 106 972 480
- CN-A- 110 784 095
- CN-A- 111 769 536
- US-A1- 2013 085 623
- US-A1- 2019 296 646

## Description

### TECHNICAL FIELD

Embodiments of this application relate to the field of power supply technologies, and in particular to power feeding equipment and a power supply method.

### BACKGROUND

With development of an information communication technology (information communication technology, ICT), an ICT device (or referred to as an information communication device) is widely used in various communication environments. Therefore, providing a reliable and efficient power supply solution for the ICT device has become a hot research area.

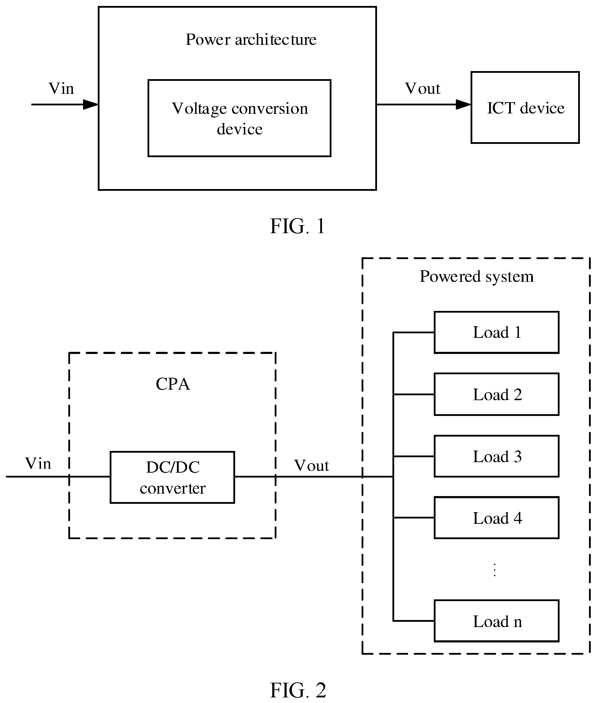

As shown in FIG. 1, in a power architecture of an ICT device, a voltage conversion device, such as a direct current-direct current (direct current-direct current, DC/DC) module (which may also be referred to as a DC/DC conversion module or a DC/DC converter), is a main component, is configured to perform voltage transformation (such as step-down or step-up processing) on an input electrical signal (such as Vin), and output a processed electrical signal (such as Vout) to an ICT device (which may also be referred to as a load), to match supply voltage requirements of different ICT devices, and supply power to the ICT devices.

Generally, because the load and the power architecture are in a series relationship, and there is no energy consumption apparatus between an input port of the load and an output port of the power architecture, it may be considered that input power of the load is the same as output power of the power architecture. In a conventional technology, to match input power requirements of a load in different operation scenarios, a power architecture needs to always (that is, in different power output scenarios) maintain full-load operation of each voltage conversion device (such as a DC/DC converter) of the power architecture, so that when the load requires relatively large input power, the power architecture can provide sufficient output power for the load.

Currently, when the power architecture performs power supply output, power supply efficiency when the power architecture operates in a low-load (that is, a relatively low power requirement of the load) state is lower than power supply efficiency when the power architecture operates in a high-load (that is, a relatively high power requirement of the load) state. In addition, in an actual operation scenario, many systems spend less time in high-load operation, and are in a low-load operation state most of the time. As a result, the power architecture is often in an operating state with low power supply efficiency when performing power supply output, and therefore highly efficient and energy-saving power supply output cannot be implemented.

US 2013/085623 A1 describes that A power supply device includes two or more power supply units connected in parallel with each other, each of which includes a rectifier for converting DC power from a DC power source or AC power from an AC power source into predetermined rated DC power. The device further includes a sensor for detecting a load current rate of each of the power supply units, and a controller. The controller controls the operation of the power supply units to reduce the total amount of power consumption per power supply unit calculated based on the rated DC power and the efficiency of each of the power supply units corresponding to the load current rate. US 2019/296646 A1 describes a reconfigurable power circuit including a single one-way DC to DC power converter. The reconfigurable power circuit is configurable by a digital data processor as one of three different power channels. Power channel provides output power conversion. Power channel provides input power conversion. Power channel provides bi-directional power exchange without power conversion.

### SUMMARY

Embodiments of this application provide power feeding equipment and a power supply method, which resolve a problem that power supply efficiency of an existing power architecture is low, and high efficiency and energy saving cannot be implemented.

To achieve the foregoing objectives, the following technical solutions are used in embodiments of this application.

According to the invention a power feeding equipment according to claim 1 is provided.

Based on this solution, in the power feeding equipment, centralized control of a plurality of first power units can be implemented by using one control unit. This provides a possibility for the control unit to perform overall management on operation of the plurality of first power units based on a power requirement. When the equipment operates, the control unit may selectively control, based on a magnitude of power currently required to be output, some or all first power units to perform power output, so that the power feeding equipment always operates within a proper load range, to avoid a problem that power supply efficiency is low due to operating in a light-load state, thus performing highly efficient and energy-saving power supply.

In a possible design, a communication interface of the control unit is coupled to a communication interface of the powered system. That the control unit is configured to obtain power of the powered system includes: The control unit is configured to receive the current required power from the powered system by using the communication interface of the control unit. Based on this solution, a solution for the control unit to obtain the current required power is provided. To be specific, the powered system may proactively report a magnitude of the current required power through communication with the control unit.

In a possible design, that the control unit is configured to obtain the current required power of the powered system includes: The control unit is configured to monitor output power of a power supply output of each of the N first power units, and determine the current required power of the powered system based on the monitored output power of the power supply output of each of the N first power units. Based on this solution, another solution for the control unit to obtain the current required power is provided. To be specific, the control unit determines the current required power by monitoring output power of each first power unit in operation. It may be understood that, because total output power of one or more first power units in an operating state is equal to required power of the powered system, the current required power can be accurately obtained by using this solution. In addition, because the powered system does not need to proactively report, decoupling to a specific extent between the power feeding equipment and the powered system can be implemented, to reduce a requirement for the powered system.

In a possible design, the power feeding equipment further includes a second power unit. A power supply input of the second power unit is coupled to the power interface, and a power supply output of the second power unit is coupled to the power supply input of the powered system. A control terminal of the second power unit is coupled to the control terminal of the control unit. The control unit is further configured to: when there is a failed power unit in the M first power units, control, by using the control terminal of the control unit, the second power unit to supply power to the powered system. Based on this solution, a backup power unit may be disposed in the power feeding equipment, so that when a first power unit fails and cannot perform normal power supply output, the backup power unit is enabled to perform power output, to ensure that power supply to the powered system is not affected, thus improving reliability of power supply output of the power feeding equipment, and providing necessary time for repairing and replacing the failed first power unit. It should be noted that, in this embodiment of this application, that the second power unit is enabled to enable the backup power unit to perform power supply output is used as an example. In some other embodiments, when a first power unit fails, if other first power units in the power feeding equipment are in an off state, the control unit may also control these first power units in the off state to start to perform power output, to achieve a same effect as that of enabling the second power unit to perform power supply output.

According to the invention, the communication interface of the control unit is coupled to the communication interface of the powered system. The control unit is further configured to: when there is a failed power unit in the M first power units, send a failure message to the powered system by using the communication interface of the control unit, to indicate the powered system to perform power derating. Based on this solution, when the first power unit in the operating state fails to perform normal power output, the control unit can notify the powered system to perform power derating. For example, the powered system may turn off some unnecessary loads, to reduce the current required power to implement power derating. In this way, it is ensured that the power feeding equipment can normally supply power to a load required by normal operation of the powered system, so that impact of a failure of the first power unit on the normal operation of the powered system is minimized.

In a possible design, the first power unit includes a transformer module. An input of the transformer module is the power supply input of the first power unit, an output of the transformer module is the power supply output of the first power unit, and a control terminal of the transformer module is the control terminal of the first power unit. That the control unit is configured to control, by using the control terminal of the control unit, M first power units of the N first power units to supply power to the powered system includes: For each of the M first power units, the control unit is configured to send a control signal to the first power unit by using the control terminal of the control unit. The first power unit is configured to perform, by using the transformer module based on the control signal, voltage transformation on an electrical signal input from the power interface, so that the first power unit supplies power to the powered system. Based on this solution, specific composition of the first power unit is provided. For example, the first power unit may include a transformer module that can perform voltage transformation. A power supply signal can meet a supply voltage requirement of the powered system through voltage transformation of the transformer module.

In a possible design, the first power unit includes a transformer module and a driver module. An input of the transformer module is the power supply input of the first power unit, an output of the transformer module is the power supply output of the first power unit, a control terminal of the transformer module is coupled to an output of the driver module, and an input of the driver module is the control terminal of the first power unit. That the control unit is configured to control, by using the control terminal of the control unit, M first power units of the N first power units to supply power to the powered system includes: For each of the M first power units, the control unit is configured to send a control signal to the driver module of the first power unit by using the control terminal of the control unit. The first power unit is configured to control, by using the driver module based on the control signal, the transformer module to perform voltage transformation on the electrical signal input from the power interface, to supply power to the powered system. Based on this solution, specific composition of still another first power unit is provided. For example, in the first power unit, in addition to the transformer module, the driver module may be included. It may be understood that, generally, a control signal (such as a DPWM signal) output by the control module cannot be well adapted to all types of transformer modules. Therefore, before the control signal is input to a transformer module to control the transformer module to perform voltage transformation, signal conversion may be performed by using a driver module corresponding to the transformer module. For example, the DPWM signal is converted into a PWM signal, so that a control signal that can effectively control a corresponding transformer module to perform voltage transformation is output. It should be noted that, in this embodiment of this application, that the driver module is disposed in the first power unit is used as an example for description. In some other embodiments, the driver module may alternatively be disposed at any location between the transformer module and the control unit, for example, may be disposed within the control unit, or may be disposed, outside the control unit and the first power unit, at any location on a link between the transformer module and the control unit.

According to the invention, a power supply method according to claim 7 is provided.

In a possible design, that the power feeding equipment obtains current required power of a powered system includes: The power feeding equipment receives the current required power from the powered system.

In a possible design, that the power feeding equipment obtains current required power of a powered system includes: The power feeding equipment monitors output power of each of the N first power units, and determines the current required power of the powered system based on the monitored output power.

In a possible design, the power feeding equipment further includes a second power unit. The method further includes: When there is a failed power unit in the M first power units, the power feeding equipment controls the second power unit to supply power to the powered system.

According to the second aspect, when there is a failed power unit in the M first power units, the power feeding equipment sends a failure message to the powered system, to indicate the powered system to perform power derating.

N/A

It may be understood that the power supply method provided in the second aspect and the possible design of the second aspect, as well as the power feeding equipment provided in the third aspect may all correspond to the power feeding equipment and its operation mechanism provided in the first aspect and the possible design of the first aspect. Therefore, beneficial effects that can be achieved are similar, and details are not described herein again.

### BRIEF DESCRIPTION OF DRAWINGS

FIG. 1 is a schematic composition diagram of a power architecture;
FIG. 2 is a schematic diagram of supplying power to a powered system by using a CPA;
FIG. 3 is a schematic composition diagram of power feeding equipment according to an embodiment of this application;
FIG. 4 is another schematic composition diagram of power feeding equipment according to an embodiment of this application;
FIG. 5 is still another schematic composition diagram of power feeding equipment according to an embodiment of this application;
FIG. 6 is a schematic diagram of interfaces of a CU according to an embodiment of this application;
FIG. 7 is yet another schematic composition diagram of power feeding equipment according to an embodiment of this application;
FIG. 8 is a schematic composition diagram of a PU according to an embodiment of this application;
FIG. 9 is a schematic composition diagram of a transformer module according to an embodiment of this application;
FIG. 10 is a schematic diagram of a control signal of a transformer module according to an embodiment of this application;
FIG. 11 is another schematic composition diagram of a PU according to an embodiment of this application;
FIG. 12 is a schematic operation diagram of a driver module according to an embodiment of this application;
FIG. 13 is a schematic diagram of a required power curve according to an embodiment of this application;
FIG. 14 is a schematic diagram of another required power curve according to an embodiment of this application;
FIG. 15 is still yet another schematic composition diagram of power feeding equipment according to an embodiment of this application;
FIG. 16 is a further schematic composition diagram of power feeding equipment according to an embodiment of this application;
FIG. 17 is a schematic flowchart of a power supply method according to an embodiment of this application;
FIG. 18 is a schematic diagram of a power supply scenario according to an embodiment of this application;
FIG. 19 is another schematic diagram of a power supply scenario according to an embodiment of this application;
FIG. 20 is still another schematic diagram of a power supply scenario according to an embodiment of this application;
FIG. 21 is yet another schematic diagram of a power supply scenario according to an embodiment of this application;
FIG. 22 is still yet another schematic diagram of a power supply scenario according to an embodiment of this application;
FIG. 23 is a schematic diagram of comparison of power supply efficiency according to an embodiment of this application; and
FIG. 24 is a still further schematic composition diagram of power feeding equipment according to an embodiment of this application.

### DESCRIPTION OF EMBODIMENTS

Generally, a power supply requirement of a load may include a supply power requirement and a supply voltage requirement.

In an embodiment of this application, a system composed of one or more ICT devices as a load may be referred to as a powered system. A supply power requirement of the powered system at a specific moment is determined by an operating load in the powered system at that moment. For example, the powered system includes a load 1 to a load n. At a first moment, only some loads (for example, the load 1, a load 2, and a load 3) in the powered system operate, and therefore, the supply power requirement of the powered system at the first moment is a sum of power required by the load 1, the load 2, and the load 3 when operating. For another example, at a second moment, the powered system is in a full-load state, that is, all loads (namely, the load 1 to the load n) are in an operating state, and the supply power requirement of the powered system at the second moment is a sum of power required by all the loads (namely, the load 1 to the load n) when operating. Normal operation of the powered system can be ensured only when the supply voltage and the supply power as power supply signals meet a requirement of the powered system at the same time.

To ensure power supply to the powered system, different power architectures are provided in a conventional technology to meet power supply requirements of different powered systems. For example, a power architecture that is currently widely used has a centralized power architecture (centralized power architecture, CPA).

For example, FIG. 2 is a schematic diagram of supplying power to a powered system by using a CPA. As shown in FIG. 2, the CPA may include one voltage conversion device, and the voltage conversion device may be a DC/DC converter shown in FIG. 2. The DC/DC converter may be configured to perform step-up or step-down processing on an input power supply signal (for example, Vin), so that a voltage of a processed power supply signal (for example, Vout) can match a supply voltage requirement of the powered system. It should be noted that, as shown in FIG. 2, the CPA may supply power to a powered system that includes a plurality of loads (for example, a load 1 to a load n). Supply voltages required by the loads may be the same or different. When the supply voltages required by the loads are different, after obtaining an electrical signal with a specific voltage output by the CPA, a branch where each load is located can transform the electrical signal again by disposing a secondary-stage voltage conversion device on the branch, to obtain an electrical signal matching the supply voltage required by the load on the current branch.

As described above with respect to the supply power, at different moments, the powered system has different supply power requirements due to a difference in a quantity of operating loads. To meet supply power requirements of the powered system at different moments, the DC/DC converter in the CPA needs to be able to provide at least supply power required by the powered system in a full-load state (for example, referred to as full-load power). In addition, the DC/DC converter needs to continuously provide a power supply signal with full-load power for the powered system, so that when the powered system operates in the full-load state similar to that in the second moment in the foregoing example, the CPA can still provide enough supply power for the powered system to ensure normal operation.

Because maximum power of an electrical signal that can be output by one DC/DC converter is limited, a voltage transformation capability of the DC/DC converter is also limited. Therefore, the CPA is generally configured to supply power to a powered system with moderate supply power and a relatively high supply voltage.

Generally, power supply efficiency when the power architecture operates in a low-load state is lower than power supply efficiency when the power architecture operates in a high-load state. However, in a normal operation process, the powered system may need to operate with different loads at different moments. A low-power requirement scenario in which some loads in the powered system are enabled to operate occupies a majority of operation time of the powered system. When the CPA operates, the CPA is always able to meet a power requirement that all loads in the powered system operate at the same time. Therefore, when the loads in the powered system operate in the low-power requirement scenario (for example, only some loads in the powered system are operating, and other loads are not operating), the corresponding CPA is in a low-load operating state. In this way, in a process in which the CPA supplies power to the powered system, the CPA is in a relatively low power supply efficiency state for a long time, thus causing significant energy waste. To be specific, the power architecture cannot supply power to the powered system in a high efficiency and energy saving manner.

It may be understood that, with complication of composition of the powered system, a quantity of loads included in the powered system and a magnitude of a supply power required by each load also become larger. For example, a base station that provides communication service for 5th generation mobile networks (5th generation mobile networks, 5G) may be used as a powered system. The 5G base station may include one or more antennas and a radio frequency link corresponding to each antenna. A radio frequency device, such as a power amplifier (Power Amplifier, PA) or an antenna switch (antenna switch) that needs to be powered is disposed on each radio frequency link. Therefore, one radio frequency link may be used as one load in the powered system. It should be noted that, the 5G base station may further include another component that needs to be powered to operate, such as a signal link device such as a field programmable gate array (Field Programmable Gate Array, FPGA), an analog to digital converter (analog digital converter, ADC)/digital-to-analog converter (digital analog converter, DAC), or a clock (clock, CLK) generator. These components may be referred to as loads in the 5G base station. Because 5G communication requires a very high communication capability of a base station, a 5G base station (in particular, a 5G base station that supports a multiple-input multiple-output (multiple-input multiple-output, MIMO) technology) generally includes a plurality of loads formed by radio frequency links. Similarly, supply power required by each load is also higher than before due to a requirement for a communication capability. When power is supplied to a powered system, such as a 5G base station, energy waste in the power architecture becomes more unacceptable. Thus, how to improve power supply efficiency so that the power architecture can supply power to the powered system in a high efficiency and energy saving manner has become an urgent problem to be solved.

Embodiments of this application provide a power architecture and a power supply method, which can enable the power architecture to flexibly adjust a power supply policy of the power architecture based on a power supply requirement of the powered system, effectively enable the power architecture to always operate in a state with relatively high power supply efficiency, reduce energy consumption of the power architecture at a light load (to be specific, supply power required by the powered system is small) during the power supply process of the power architecture for the powered system, and realize efficient and energy-saving power supply for the powered system.

The following describes embodiments of this application in detail with reference to the accompanying drawings. It should be noted that in the following example, the power architecture may also be referred to as power feeding equipment.

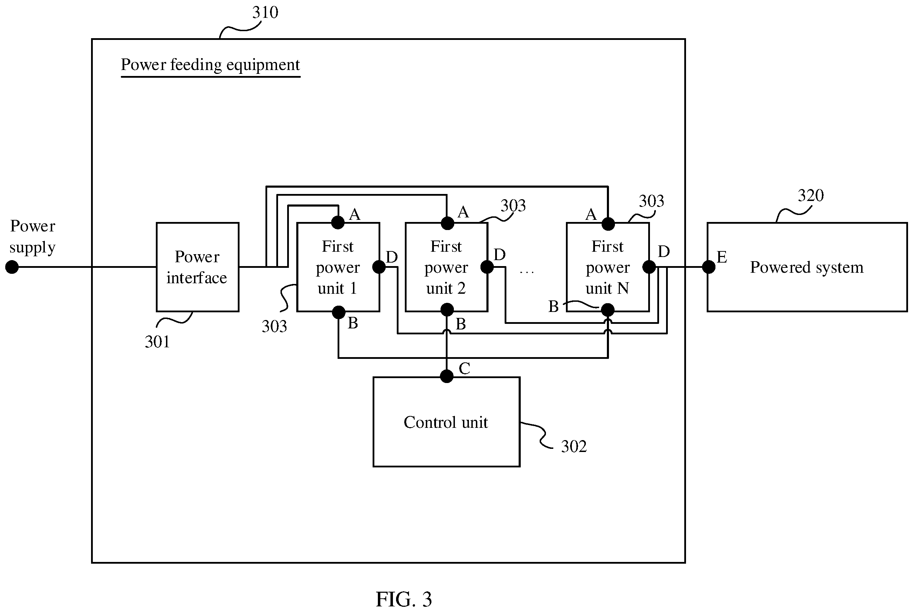

FIG. 3 is a schematic composition diagram of power feeding equipment 310 according to an embodiment of this application. For ease of description, FIG. 3 also shows a powered system 320, and the power feeding equipment 310 may supply power to the powered system 320, to support normal operation of the powered system 320. As shown in FIG. 3, the power feeding equipment 310 may include a power interface 301, a control unit 302, and N first power units 303. N is an integer greater than 1. For example, the N first power units 303 are respectively a first power unit 1, a first power unit 2, ..., and a first power unit N. In this embodiment of this application, the control unit 302 may also be referred to as a CU (control unit) 302, and the first power unit 303 may also be referred to as a PU (power unit) 303.

As shown in FIG. 3, the power interface 301 is separately coupled to power supply inputs (such as terminals A in FIG. 3) of N PUs 303, and power supply outputs (such as terminals D in FIG. 3) of the PUs 303 are separately coupled to a power supply input (such as a terminal E in FIG. 3) of the powered system 320.

A control terminal (such as a terminal C in FIG. 3) of the CU 302 is coupled to a control terminal (such as a terminal B in FIG. 3) of each PU 303 of the N PUs. A sum of output power of the N PUs 303, such as output power of all power units of the PU 1, the PU 2, ..., and the PU N is greater than or equal to a maximum required power of the powered system 320.

In a state in which the power interface 301 is connected to a power supply, the power feeding equipment 310 may perform power supply output to the powered system 320. For example, the CU 302 may be configured to: obtain current required power of the powered system 320; control, by using the terminal C based on the current required power of the powered system 320, some PUs 303 of the N PUs 303 (for example, M PUs 303) to supply power to the powered system 320; and control remaining PUs 303 (for example, N - M PUs 303) to be in an off state. Output power of the M PUs 303 is greater than or equal to the current required power of the powered system 320, and M is an integer greater than or equal to 1 and less than or equal to N.

Thus, the power feeding equipment 310 can output enough supply power to the powered system 320 through the M PUs 303, and at the same time, a PU 303 in an operating state can avoid operating in a low-load state, thus improving power supply efficiency of the PU 303. In addition, unnecessary power consumption caused by the remaining N - M PUs 303 can be reduced. In this way, the power feeding equipment 310 can flexibly adjust a quantity of PUs 303 in the operating state based on a change of required power of the powered system 320, for example, to control a corresponding quantity of PUs 303 to perform power supply output, and to control remaining PUs 303 to be turned off. Further, power supply efficiency of the entire power feeding equipment 310 is improved, and unnecessary power consumption is reduced, so that a purpose of supplying power to the powered system 320 in a high efficiency and energy saving manner is achieved.

To be able to describe the power feeding equipment 310 provided in this embodiment of this application more clearly, the following describes the CU 302 and the PU 303 in detail.

### 1. Description of the CU 302.

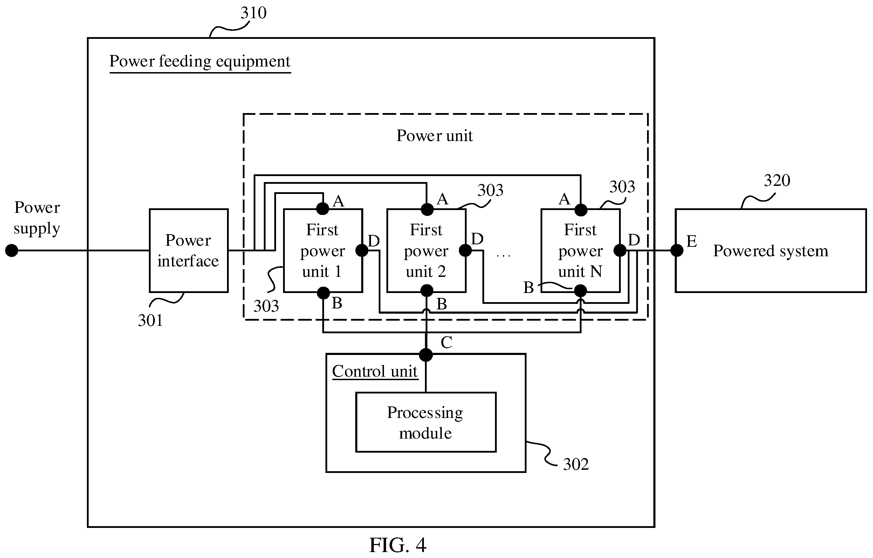

As shown in FIG. 4, the CU 302 may include a processing module. The processing module may include one or more processing units. For example, the processing unit may be a central processing unit (central processing unit, CPU), a digital signal processor (digital signal processor, DSP), a pulse-width modulation integrated circuit chip (pulse-width modulation integrated circuit chip, PWM IC), or a neural-network processing unit (neural-network processing unit, NPU). Different processing units may be independent components, or may be integrated into one or more processing modules.

In an example, in this embodiment of this application, the processing module may be configured to implement obtaining and control functions of the CU 302. For example, the processing module may establish a communication relationship with the PU 303 by using one or more interfaces disposed on the CU 302. The communication relationship includes but is not limited to transmission of a control signal and collection of data. For example, the processing module may collect electrical parameters such as a voltage and/or a current and/or power of an output electrical signal of power supply output of the PU 303, to determine an output power size of the power feeding equipment 310, and then obtain currently required power of the powered system. For another example, the processing module may transmit the control signal to the PU 303, to control, based on the current required power of the powered system, M PUs 303 of the N PUs 303 shown in FIG. 3 to perform power supply output, and control remaining N - M PUs 303 to be turned off, so that in the low-load state, the power feeding equipment can reduce power consumption caused when the N - M PUs 303 operate, thus achieving the purpose of supplying power to the powered system in a high efficiency and energy saving manner.

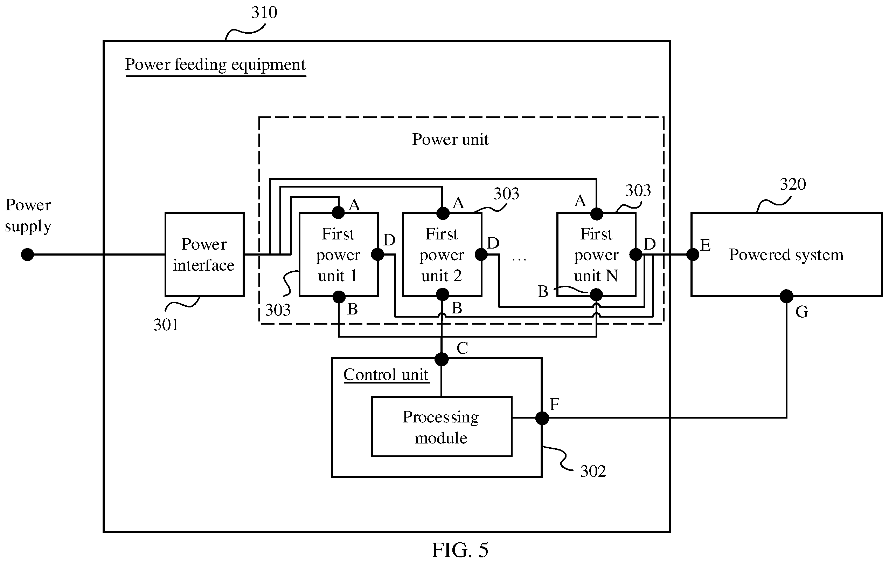

In some other embodiments, the processing module may further establish a communication relationship with the powered system 320 by using an interface disposed therein. For example, FIG. 5 is a schematic composition diagram of another power feeding equipment according to an embodiment of this application. As shown in FIG. 5, the CU 302 may be coupled to a communication interface (such as a terminal G in FIG. 5) of the powered system by using a communication interface (such as a terminal F in FIG. 5) of the CU 302 to establish a communication relationship. The communication relationship may be used by the CU 302 to receive the current required power sent by the powered system 320, so that the CU 302 can know the current required power of the powered system 320. The communication relationship may be further used to: when the one or more PUs 303 fail to perform power supply output normally (that is, fail), transmit an indication of derating to the powered system 320 by the CU 302.

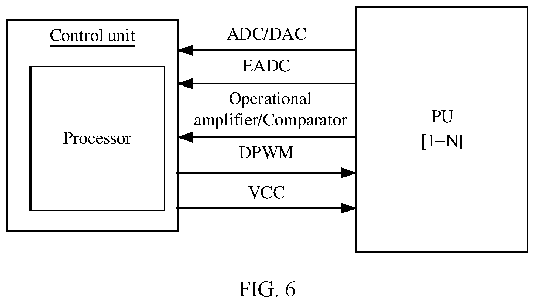

In an example, FIG. 6 is a schematic diagram of interfaces of the CU 302. One or more processing modules in the CU 302 may communicate with the outside by using these interfaces. As shown in FIG. 6, a plurality of interfaces, such as a digital pulse-width modulation (digital pulse-width modulation, DPWM) interface, a pulse-width modulation (pulse-width modulation, PWM) interface, an analog to digital converter (analog digital converter, ADC) interface, a digital-to-analog converter (digital analog converter, DAC) interface, an error analog to digital converter (error analog digital converter, EADC) interface, an operational amplifier/comparator interface, and a VCC interface coupled to the PU 1 to the PU N, are disposed on the CU 302, to perform effective control on the PU 1 to the PU N by using these interfaces. For example, the DPWM interface may be configured to transmit a DPWM signal to each of the N PUs, so that each PU performs corresponding voltage transformation based on the DPWM signal.

The EADC interface may be configured to receive a voltage or current signal sent by each of the N PUs, and be configured to output a suitable DPWM signal to meet an output voltage requirement of the powered system.

The ADC/DAC interface and the operational amplifier/comparator interface may be configured to receive a signal such as a current signal or a temperature signal that is sent by each of the N PUs, to perform protection in an abnormal situation of the powered system, for example, when a current is excessively large or a temperature is excessively high.

The VCC interface may be configured to forward a power supply signal (such as a VCC signal). The VCC signal may be provided by an auxiliary power supply module, and specific descriptions related to the auxiliary power supply module will be given in the following statements. In addition to the foregoing interfaces, a communication interface (not shown in FIG. 6) may be disposed on the CU 302. The communication interface may be coupled to a communication interface of the powered system 320 by using a power management bus (Power Management Bus, PMBUS) or an inter-integrated circuit bus (inter-integrated circuit bus, I2C), to receive current required power sent by the powered system 320 and/or send a signal such as a derating indication to the powered system 320.

It should be noted that the interface of the CU 302 shown in FIG. 6 is merely an example for description. In some other embodiments of this application, the CU 302 may include more or fewer interfaces to perform different types of corresponding signal transmission. It may be understood that, any interface and signal transmission that can effectively support the CU 302 in controlling the PU 303 should be included in a range of the technical solution provided in this embodiment of this application.

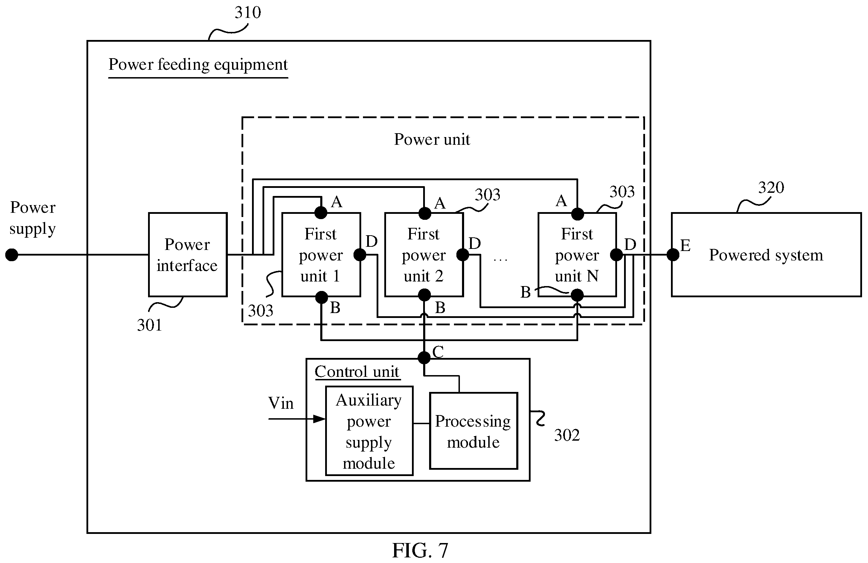

In the example, that the CU 302 includes a processing module is used as an example for description. In some other embodiments of this application, in addition to the foregoing processing module, the CU 302 may include another function module. For example, the CU 302 may further include an auxiliary power supply module. FIG. 7 is a schematic composition diagram of another power feeding equipment according to an embodiment of this application. That the power feeding equipment 310 has the composition shown in FIG. 3 is still used as an example. It may be understood that, when the processing module operates, there is also a requirement for an electrical parameter such as a supply voltage of a power supply signal. For example, a VCC signal with a specific voltage is required to supply power to the processing module. The auxiliary power supply module may be configured to process (such as transform) an electrical signal (such as Vin in the figure) input into the CU 302, to obtain a power supply signal (such as VCC) that can support normal operation of the processing module, and output the power supply signal to the processing module, to ensure normal operation of the processing module. It should be noted that, when supplying power to the processing module, the auxiliary power supply module may also transmit the output power supply signal to another module. In an example, the auxiliary power supply module may transmit the VCC signal by using a VCC port of the processing module to another module that needs power supply from the auxiliary power supply module. It should be noted that, during a specific implementation, different types of auxiliary power supply modules may be selected based on a requirement, so that a voltage transformation capability and output power of the auxiliary power supply modules can meet a requirement for supplying power to one or more modules.

### 2. Description of the PU 303.

As an important component in the power feeding equipment 310, the PU 303 may be configured to perform voltage transformation (for example, step-up or step-down) processing on an input electrical signal under control of the CU 302, and output a processed electrical signal to the powered system 320, to supply power to the powered system 320 while the processed electrical signal matches a voltage requirement of the powered system 320.

It should be noted that in this embodiment of this application, the M PUs 303 of the N PUs 303 in the power feeding equipment 310 may be flexibly enabled under control of the CU 302, to supply power to the powered system 320, to ensure that sufficient supply power is provided to ensure normal operation of the powered system 320. The remaining N - M PUs 303 can be in an off state under the control of the CU 302. In this way, power consumption of the N - M PUs 303 can be reduced, so that overall power consumption of the power feeding equipment 310 is flexibly adjusted with the power requirement of the powered system 320, so that a proportion of power consumption of the power feeding equipment 310 in output power is always in a relatively low state, improving power supply efficiency, and performing power supply in a high efficiency and energy saving manner for the powered system 320.

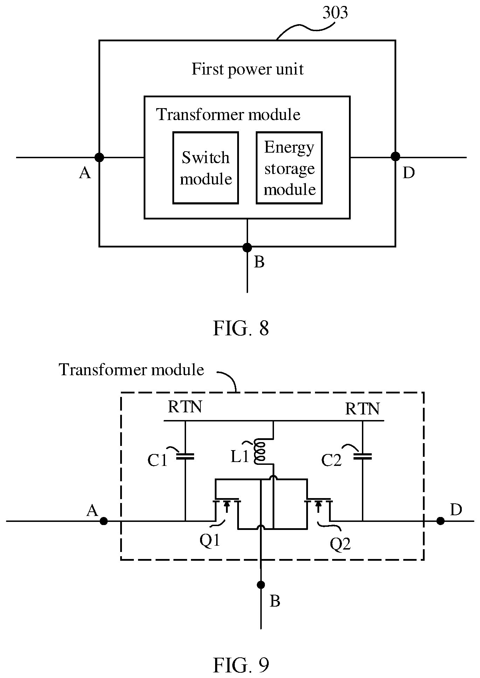

FIG. 8 is a schematic composition diagram of a PU 303 according to an embodiment of this application. Each of the N PUs 303 in the power feeding equipment shown in FIG. 3, FIG. 3, FIG. 5, or FIG. 7 may have the composition. As shown in FIG. 8, the PU 303 may include a transformer module. An input, an output, and a control terminal may be disposed in the transformer module. In this example, the input of the transformer module may be the terminal A of the PU 303, the output of the transformer module may be the terminal D of the PU 303, and the control terminal of the transformer module may be the terminal B of the PU 303. When the CU 302 controls the M PUs 303 to perform power supply output, the transformer module in each PU 303 may receive a control signal (for example, a control signal from the CU 302) by using the control terminal, and perform, based on the control signal, voltage transformation, such as step-up or step-down processing, on the electrical signal input from the terminal A, and transmit the processed electrical signal to the terminal E of the powered system by using the terminal D. Correspondingly, when the CU 302 controls the N - M PUs 303 to be turned off, the transformer module in each PU 303 may receive the control signal (for example, the control signal from the CU 302) by using the control terminal, and perform turn-off processing based on the control signal, without outputting any electrical signal by using the terminal D. It may be understood that, because the voltage transformation in the M PUs 303 is performed under the control of the CU 302, the processed electrical signal can meet a supply voltage requirement of the powered system. However, because the transformer modules in the N - M PUs 303 are turned off under control of the control signal, power consumption of these PUs 303 can be effectively avoided.

In an example, as shown in FIG. 8, the transformer module provided in this embodiment of this application may include an energy storage module configured to store energy, and a switch module configured to perform segmented sampling on the electrical signal. In a specific implementation, the energy storage module may be implemented by using a device such as an inductor, a transformer, and/or a capacitor. The switch module may be implemented by using a field effect transistor (Field Effect Transistor, FET). It should be noted that, in implementations of different transformer modules, a connection relationship between the energy storage module and the switch module may be the same or different. Therefore, a specific connection relationship between the energy storage module and the switch module is not shown in the transformer module shown in FIG. 8.

To clearly describe the transformer module provided in this embodiment of this application, with reference to FIG. 9, a specific schematic composition diagram of the transformer module is shown by using an example in which the energy storage module is an inductor and a metal oxide semi-conductor field effect transistor (Metal Oxide Semi-conductor Field Effect Transistor, MOSFET) is used as a FET. As shown in FIG. 9, the transformer module may include a MOSFET Q1, a MOSFET Q2, and an inductor L1. Q1 and Q2 may be used as switch modules in the transformer module, and L1 may be used as an energy storage module in the transformer module. An input of Q1 may be a terminal A of the transformer module, and can be configured to receive an electrical signal accessed by using a power interface. An output of Q1 may be separately coupled to an input of Q2 and a terminal of L1. An output of Q2 may be a terminal D of the transformer module, and can be configured to transmit a processed electrical signal to the powered system. The other terminal of L1 is coupled to a power supply output. Control terminals of Q1 and Q2 are further separately coupled to a terminal B of the transformer module. Therefore, Q1 and Q2 may receive a control signal from the CU 302 by using the terminal B, and adjust respective on/off states based on the control signal, so that Q1 and Q2 are in an alternating on state, thus realizing the following purposes: The transformer module performs, based on the control signal, corresponding voltage transformation on the electrical signal input from the terminal A, and a corresponding transformer module is turned off. It may be understood that the control signal needs to control Q1 and Q2 to be in the alternating on state, to be specific, Q2 is off when Q1 is on, and Q2 is on when Q1 is off. Therefore, in this implementation, the control signal may include two sub-signals (such as PWM1 and PWM2), which are respectively used to control operation states of Q1 and Q2.

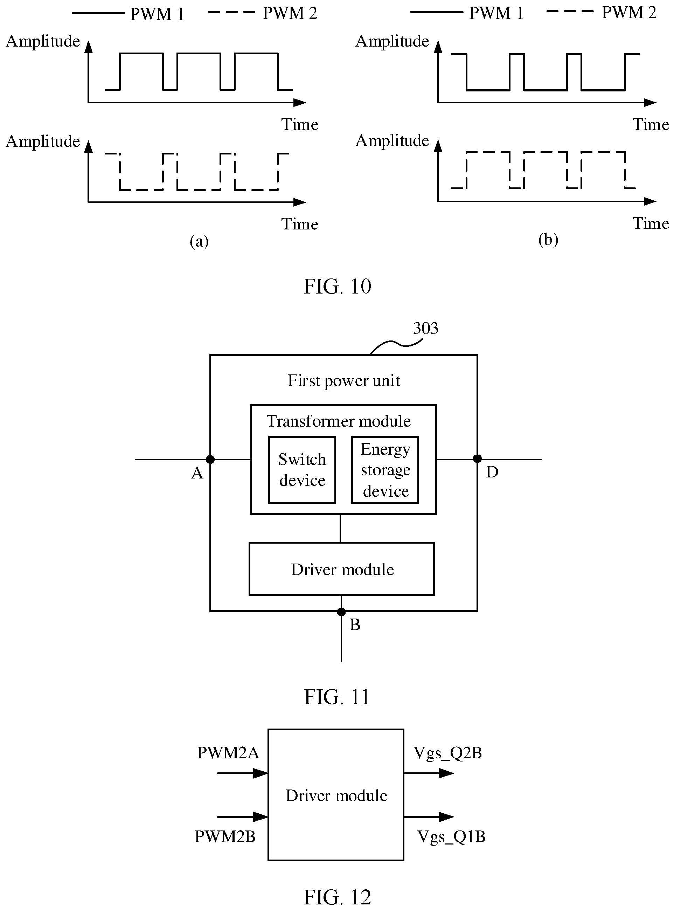

In an example, the two sub-signals in the control signal may be clock signals shown in FIG. 10. For example, PWM1 is used to control Q1, PWM2 is used to control Q2, a high level is used to control a switch device to be in an on state, and a low level is used to indicate that a switch device is in an off state. As shown in (a) of FIG. 10, Q1 and Q2 are in the alternating on state under control of PWM1 and PWM2. Because high level duration of PWM1 in each cycle is greater than high level duration of PWM1 in each cycle, on duration of Q1 is longer than on duration of Q2 in each cycle. In this case, the transformer module may perform step-up processing on the electrical signal. Correspondingly, when the control signal includes PWM1 and PWM2 shown in (b) of FIG. 10, because high level duration of PWM1 in each cycle is less than high level duration of PWM1 in each cycle, on duration of Q1 is less than on duration of Q2 in each cycle. In this case, the transformer module may perform step-down processing on the electrical signal.

It may be understood that composition of the transformer module shown in FIG. 9 may also be referred to as a buck-boost circuit. This is only an example. In this embodiment of this application, the transformer module may further be implemented by using another device or circuit that has a voltage transformation function. For example, the transformer module may be another conventional non-isolated DC/DC circuit (such as a buck circuit). For another example, the transformer module may be an isolated DC/DC conversion circuit (for example, a full-bridge conversion circuit, a flyback circuit, and a forward circuit).

It should be noted that the foregoing example is described by using an example in which the PU 303 includes a transformer module configured to implement voltage transformation. In some other embodiments, the PU 303 may further include another function module. For example, a driver module may be further disposed in the PU 303. FIG. 11 is a schematic composition diagram of another PU 303 according to an embodiment of this application. As shown in FIG. 11, an input and an output may be disposed in the driver module. The input of the driver module may be a terminal B of the PU 303, and the output of the driver module may be coupled to a control terminal of the transformer module. When the PU 303 operates, the driver module may receive a control signal (such as a DPWM signal) sent by the CU 302, convert the DPWM signal into a PWM signal that can be directly identified by the transformer module, and transmit the signal to the transformer module, so that the transformer module can perform corresponding voltage transformation accordingly. In addition, corresponding power supply is also required when the driver module operates. In some embodiments of this application, the power supply to the driver module may be provided by the auxiliary power supply module shown in FIG. 8, or certainly may be provided by another power supply module. This is not limited in this embodiment of this application.

It should be noted that, because the control signal output by the driver module is used to control the transformer module to perform voltage transformation, model selection of the driver module needs to correspond to the transformer module. In an example, when the transformer module uses the composition shown in FIG. 9, the driver module may use an isolation driver of a model 2EDF7275K to implement a corresponding function. As shown in FIG. 12, the isolation driver may receive input signals of PWM2A (namely, one sub-signal in the DPWM signal input into the driver module) and PWM2B (namely, another sub-signal in the DPWM signal input into the driver module) and convert the signals into Vgs_Q2B (namely, PWM1 controlling Q1) and Vgs_Q1B (namely, PWM2 controlling Q2) and output them to Q1 and Q2 in the transformer module, so that Q1 and Q2 respectively perform voltage transformation on the input electrical signals based on Vgs_Q2B and Vgs_Q1B.

In addition, it may be understood that, to implement conversion from the DPWM signal into the PWM signal, the driver module may be disposed in the PU 303 as shown in the example in FIG. 11, or may be disposed in the CU 302. With reference to FIG. 7, when the driver module is disposed in the CU 302, the driver module may be disposed between an output and a terminal C of the processing module, to convert the DPWM signal output by the processing module into a PWM signal and output the PWM signal to the PU 302 by using the terminal C. In a specific implementation process, a disposing location of the driver module may be flexibly determined based on an actual requirement. This is not limited in this embodiment of this application.

Based on the foregoing description, the CU 302 may actively manage an operating PU 303 by obtaining current required power of the powered system 320. In this embodiment of this application, the CU 302 may obtain the current required power of the powered system through a variety of different ways. The following uses an example in which the power feeding equipment has the composition shown in FIG. 3 for description.

In some embodiments, the CU 302 may monitor the output power of the power supply output (such as the terminal D shown in FIG. 3) of each PU 303 of the N PUs. The current required power of the powered system 320 is determined based on the monitored output power.

It may be understood that, because the power supply output (namely, the terminal D) of the power feeding equipment 310 and the power supply input (namely, the terminal E) of the powered system are in a series structure, and there is no energy consumption component between the terminal D and the terminal E logically, a sum of output power output through the terminal D by all PUs 303 in the power feeding equipment 310 (which may also be referred to as output power of the power feeding equipment 310) is the same as input power of the powered system 320. Therefore, in this embodiment of this application, the CU 302 may determine the input power of the powered system 320 by monitoring the output power of each PU 303.

It should be noted that, in some implementations of this embodiment, the CU 302 may be coupled to the terminal D of each PU 303 by using a sampling line (not shown in FIG. 3), to sample the output power of each PU 303. For example, in a sampling process of the output power, the CU 302 may directly obtain the output power by directly sampling power of an output electrical signal, or may calculate and obtain the output power by sampling another electrical parameter (such as a current and a voltage) of the output electrical signal. This is not limited in this application.

Certainly, the CU 302 may further determine the current required power of the powered system 320 based on signals in some other power feeding equipment 310. For example, in another possible implementation of this embodiment, the CU 302 may obtain output power of each power unit by using a terminal B of the power unit. For example, each PU 303 of the N PUs 303 may be set to feed back, when performing power output, a magnitude of the output power of the PU 303 to the CU 302 by using the terminal B. In this way, the CU 302 may obtain, by using the terminal C, output power of each PU 303 that is performing power output. Therefore, the CU 302 may obtain the output power of the power feeding equipment 310, namely, the current required power of the powered apparatus 320 without adding any additional line. In addition, the PU 303 may be further set to feed back, by using the terminal B when no power output is performed (that is, turned off), a message that there is no power output to the CU 302, or feed back no message. Therefore, the CU 302 may determine, based on the message that there is no power output or based on no feedback being received within a preset time, that a corresponding PU 303 does not perform power output.

The foregoing description is described by using an example in which the CU 302 determines the current required power of the powered system 320 based on a signal inside the power feeding equipment 310. In some other embodiments, the CU 302 may alternatively determine the current required power of the powered system 320 by communicating with the powered system 320. For example, the power feeding equipment 310 has the composition shown in FIG. 5. The CU 302 may further be coupled to a communication interface (such as the terminal G in FIG. 5) disposed on the powered system 320 by using a communication interface (such as the terminal F in FIG. 5) disposed on the CU 302. In this example, the powered system 320 may send the current required power of the powered system 320 to the CU 302 by using the terminal G. In this way, the CU 302 can directly obtain the current required power of the powered system 320. In addition, the powered system 320 may further send, to the CU 302 by using the terminal G, an identifier that is used to indicate a magnitude of the current required power of the powered system 320, so that the CU 302 determines the current required power of the powered system 320 based on the identifier. For example, the CU 302 may pre-store a correspondence between an identifier and a magnitude of power. When receiving an identifier (such as an identifier 1) sent by the powered system 320, the CU 302 may determine, by using the correspondence stored in the CU 302, a magnitude of power corresponding to the identifier 1, and thus determine current required power of the powered system 320. Certainly, the CU 302 may alternatively obtain the current required power of the powered system 320 in another manner (for example, receive the magnitude of the current required power of the powered system 320 by using an external interface). This is not limited in this embodiment of this application.

It should be noted that, in some implementations, an operation of determining the current required power of the powered system 320 by the CU 302 may be performed in real time. For example, since the power feeding equipment 310 starts to supply power to the powered system 320, the current required power of the powered system 320 is continuously determined. Therefore, the CU 302 may know a required magnitude of the current required power at any moment during the operation process of the powered system 320, so that the CU 302 can more accurately control power supply to the powered system 320. In some other implementations, the operation of determining the current required power of the powered system 320 by the CU 302 may alternatively be performed periodically. For example, the CU 302 may determine the current required power of the powered system 320 based on a preset cycle. Therefore, while a workload of the CU 302 is effectively reduced, a timely response to a change of the current required power of the powered system 320 is provided. Certainly, the CU 302 may alternatively receive, through the external interface, instructions used to trigger determining of the current required power of the powered system 320, and perform an operation of determining the current required power of the powered system 320 based on the instruction. In a specific implementation, one or more implementations in the example may be used. This is not limited in this embodiment of this application.

After determining the current required power of the powered system 320, the CU 302 may adjust operating states of N PUs 303, for example, perform power supply or shut down, to turn off an unnecessary PU 303 while a power requirement of the powered system 320 is matched. In this way, the power feeding equipment 310 always performs highly efficient power supply output in a proper load operating state, thus effectively prolonging service life of the PU 303 while supplying power to the powered system 320 in a high efficiency and energy saving manner.

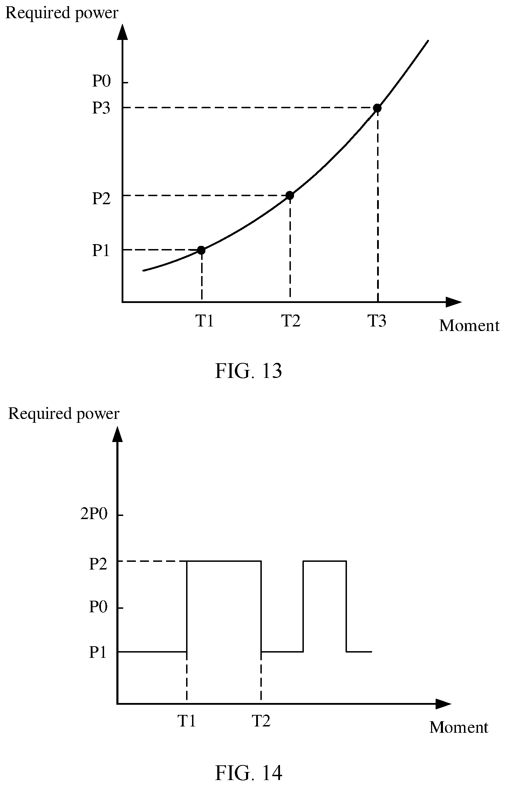

For example, one PU 303 can provide output power of P0 at most, and a power requirement curve of the powered system 320 is shown in FIG. 13. At a moment T1, the CU 302 obtains current required power P1 of the powered system 320. For example, power P0 that can be provided by one PU 303 is greater than P1. The CU 302 may control any one of the N PUs 303 to start operating, perform power supply output to the powered system 320, and control the other N - 1 PUs 303 to be in an off state. Similarly, at a moment T2, the CU 302 obtains current required power P2 of the powered system 320. For example, power P0 that can be provided by one PU 303 is greater than P2. The CU 302 may continue to control one of the N PUs 303 to start operating, perform power supply output to the powered system 320, and control the other N - 1 PUs 303 to be in the off state, to reduce power consumption of the N - 1 PUs 303.

It should be noted that the CU 302 may monitor the current required power of the powered system 320 in real time. When a quantity of PUs 303 that need to be turned on at the moment T1 is the same as a quantity of PUs 303 that need to be turned on at the moment T2, the CU 302 may control a PU 303 turned on at the moment T2 which is the same as that at the moment T1 to perform power supply output, to reduce switching times of the PU 303, thus increasing reliability of a power supply system. In some other implementations, the CU 302 may alternatively adjust a PU 303 performing power supply output to another PU 303 that is different from the PU 303 at the moment T1. In this way, a PU 303 that is in an operating state at the moment T1 can stop operating at the moment T2, thus prolonging service life of the PU 303. In an actual implementation process, a configuration method of the PU 303 may be flexibly selected. This is not limited in this embodiment of this application.

At a moment T3, the CU 302 obtains current required power P3 of the powered system 320. In this case, for example, power P0 that can be provided by one PU 303 is greater than P3, and P3 is very close to P0. If only one PU 303 is continuously turned on for power supply, a workload of the PU 303 is relatively large, so that power supply efficiency of the PU 303 is reduced, and an additional damage risk is introduced. Therefore, in this embodiment of this application, a preset threshold may be set, for example, the threshold is set to be 80% of P0. If the current required power is greater than the preset threshold, it is considered that an additional PU 303 needs to be turned on for power supply output. To be specific, at the moment T3, the CU 302 determines that if the current required power P3 is greater than 80% of P0, the CU 302 may control, by using a control signal, two PUs 303 to perform power supply output.

It should be noted that, in the foregoing example, a supply power requirement of the powered system 320 is continuously changed (as shown in FIG. 13). In some other scenarios, the supply power requirement of the powered system 320 may alternatively jump. For power supply to such powered system 320, the power supply method in the example may be used, or another power supply method may be used, to simplify operation of the CU 302 and improve power supply stability.

For example, a change of the supply power requirement of the powered system 320 with time is a clock curve shown in FIG. 14, the power feeding equipment 410 has the composition shown in FIG. 5, one PU 303 can provide power of P0 at most, P1 is less than P0, and P2 is greater than P0. The powered system 320 may report a power requirement range to the CU 302 by using the terminal G. For example, the power requirement range is reported to be [P1, P2]. The CU 302 may know, by receiving the power requirement range, that in a next period of time, the powered system 320 needs only the foregoing two power values. Before a moment T1, the powered system 320 may feed back, to the CU 302, a first power supply request used to indicate that the current required power is a lower limit of the foregoing required power range, so that the CU 302 receives the first power supply request, determines that the current required power of the powered system 320 is P1, and further controls one PU 303 to perform power supply output to the powered system 320. At the moment T1, as a power requirement of the powered system 320 jumps from P1 to P2, the powered system 320 may send, at the moment T1 to the CU 302, a second power supply request used to indicate that the current required power is an upper limit of the foregoing required power range, so that the CU 302 receives the second power supply request, and determines that the current required power of the powered system 320 is P1. For example, power provided by one PU 303 is P0, and P0 is less than P1. When it is determined that output power of P1 needs to be provided, the CU 302 may control two PUs 303 to be turned on to perform power supply output to the powered system 320. Similarly, at a moment T2, the powered system 320 may send a first power supply request to the CU 302, so that the CU 302 switches back to supply power to the CU 302 by using one PU 303. The first power supply request and the second power supply request may include a plurality of implementation methods. In an example, the first power supply request and the second power supply request may be binary numbers of 1 bit. For example, the first power supply request is 0, and the second power supply request is 1. It may be learned that by using the foregoing power supply method, real-time detection of the current required power by the CU 302 can be avoided, and because the change of the current required power may be identified by using a 1-bit form, a communication burden between the CU 302 and the powered system 320 can be reduced.

It may be learned that in the example, the powered system 320 feeds back the change of the current required power to the CU 302 in a manner of feeding back the first power supply request and the second power supply request. In some other embodiments, the powered system 320 may further continuously send, to the CU 302, a clock signal corresponding to a change of required power of the powered system 320, so that the CU 302 can determine, based on a change in a clock signal amplitude, whether a current power output policy needs to be adjusted. For example, supplying power to the powered system 320 by using one PU 303 is adjusted to supplying power to the powered system 320 by using two PUs 303.

It should be noted that in some other embodiments of this application, in addition to being able to actively manage, in the manner provided in the foregoing example and based on the current required power of the powered system 320, a PU 303 that performs power supply output, the power feeding equipment 310 may ensure stable power supply output to the powered system 320 in another manner.

In some embodiments, a second power unit may further be disposed in the power feeding equipment 310. The second power unit may be in parallel with the first power unit as a backup power unit of the first power unit. Therefore, when the first power unit fails, the second power unit is enabled, to ensure that operation of the powered system 320 is not affected by power supply. Composition of the second power unit may be the same as composition of the first power unit, or may be different from composition of the first power unit. That the composition of the second power unit is the same as the composition of the first power unit is used as an example for description below.

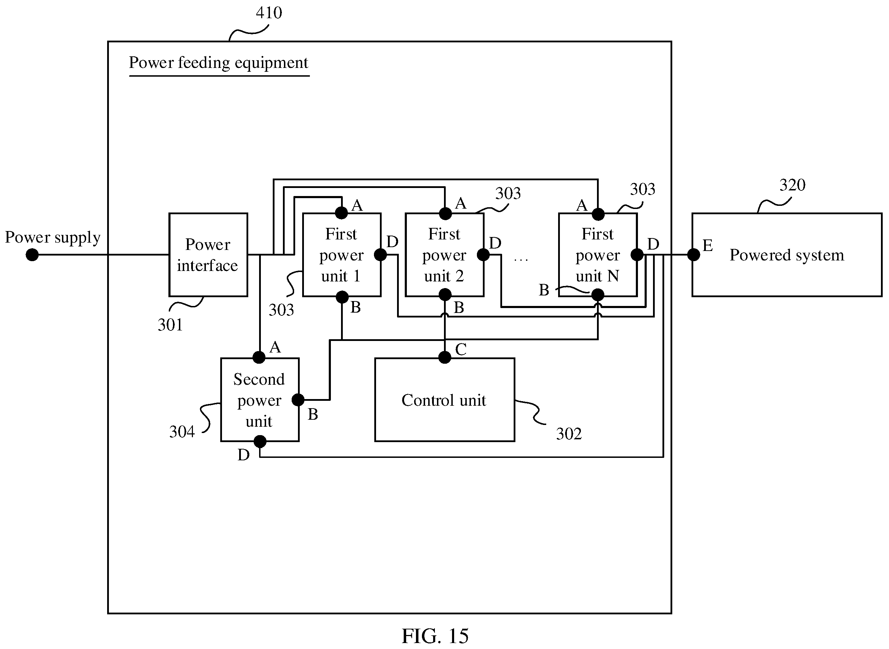

For example, FIG. 15 is a schematic composition diagram of another power feeding equipment according to an embodiment of this application. For example, the power feeding equipment has a component and a connection relationship shown in FIG. 3 and a second power unit.

As shown in FIG. 15, a terminal A of the second power unit 304 may be coupled to a power interface, a terminal B may be coupled to a terminal C of the control unit, and a terminal D may be coupled to a power supply input (terminal E) of the powered system. When the first power unit 303 operates normally, the second power unit 304 may be always in an off state under control of the control unit 302. When the first power unit 303 fails, the control unit 302 may control the second power unit 304 to start operating, to compensate for power that cannot be output by the failed first power unit 303 to the powered system 320. The control unit 302 controls the second power unit 304 to operate. A method for performing power supply output to the powered system 320 is similar to a method for controlling the first power unit 303 to perform power supply output to the system unit 320. Details are not described herein again.

It should be noted that, in the example shown in FIG. 15, that one second power unit is disposed as a backup power unit is used as an example for description. In an actual implementation process, more second power units may alternatively be disposed based on a PCB size occupation status, to further strengthen an anti-damage capability of the power feeding equipment.

It may be understood that, based on the foregoing description, a plurality of first power units are disposed in the power feeding equipment, and in some power supply scenarios, for example, when the powered system is in a partial load state, one or more first power units are in an off state. In some embodiments of this application, the one or more first power units in the off state may also serve as backup power supply units. To be specific, when a first power unit in an operating state fails, the control unit may control another first power unit in the off state to start performing power supply output to the powered system.

In this embodiment of this application, the control unit may detect a failure of the first power supply unit in a variety of manners. For example, the control unit may monitor an electrical signal at an output of the first power supply unit. When the first power supply unit fails, the electrical signal output by the first power supply unit is abnormal, for example, a sudden drop or a sudden waveform change occurs. The control unit may consider that a corresponding first power supply unit fails. For another example, a protection mechanism may be preset in the first power supply unit. When the first power supply unit fails and power supply output cannot be normally performed, the first power supply unit may proactively report a failure state of the first power supply unit to the control unit.

In the example, a solution that a backup power supply unit (for example, a second power supply unit) is used when the first power supply unit fails, to perform power supply output is provided, so that normal operation of the powered system is not affected by power supply. In some other embodiments of this application, another method may alternatively be used to ensure that operation of the powered system is not completely stopped due to a change of a power supply capability (for example, the failure of the first power supply unit). For example, when determining that the first power supply unit that is performing power supply output fails, the control unit may send a derating indication to the powered system, to indicate the powered system to turn off a current unnecessary load. The priority here is to ensure normal operation of a basic function.

It may be understood that the foregoing two solutions provided in the examples may effectively improve resistance of the power feeding equipment to damage by adding a backup power output unit, effectively ensuring power supply to the powered system. It is also possible to send a derating indication to the powered system to at least ensure that, without increasing PCB size costs, when output power cannot ensure optimal operation of the powered system, a basic function of the powered system is not limited by power supply. Each of the foregoing two solutions has advantages. In a specific implementation process, one or both of the two solutions may be flexibly selected based on a specific requirement, to ensure highly efficient and energy-saving power supply output to the powered system.

It should be noted that output power of the power feeding equipment 310 may be flexibly adjusted based on a current power requirement of the powered system 320. An output voltage of the power feeding equipment 310 may also be more flexibly adjusted based on a requirement of the powered system 320. It may be understood that the output voltage of the power feeding equipment 310 is determined by a PU 303. Generally, because different loads in the powered system 320 may require different supply voltages, the power feeding equipment 310 may output, to the powered system, an electrical signal that has a maximum supply voltage greater than or equal to supply voltages required by all loads operating in the powered system 320. Therefore, when the electrical signal is allocated to branches in which different loads are located, secondary step-down processing may be performed based on a load's requirement for a supply voltage, to obtain a supply voltage that meets a load's requirement of the branch. It may be understood that, because a step-down operation is easier to implement than a step-up operation, and other impact on an electrical signal for power supply is small, the method provided in this embodiment of this application can better meet requirements of the powered system 320 for different supply voltages. Certainly, in some other embodiments, the output voltage of the power feeding equipment 310 may alternatively be lower than the maximum supply voltage required by the load. Therefore, transformation pressure of a PU 303 in the power feeding equipment 310 can be reduced. In an actual implementation process, the foregoing two implementations may be flexibly selected based on a requirement. This is not limited in this embodiment of this application.

It should be understood that, through the description, a person of ordinary skill in the art may already have a clear understanding of composition of the power feeding equipment provided in the embodiments of this application and a working mechanism of the power feeding equipment. The following schematically describes, with reference to a schematic logical diagram, the power supply method provided in the embodiments of this application and an effect that can be implemented by the power supply method.

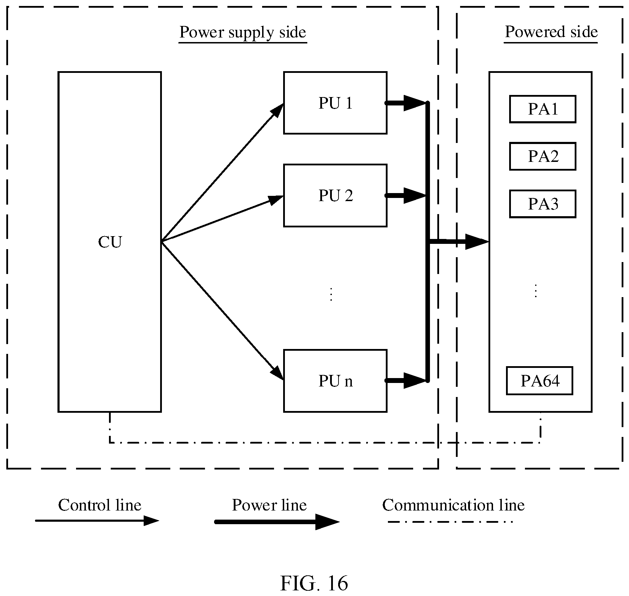

FIG. 16 is a schematic diagram of a power supply logic according to an embodiment of this application. For example, a powered system is a 5G base station. A power supply side may be corresponding to the power feeding equipment shown in any one of FIG. 3 to FIG. 15. As shown in FIG. 16, the power supply side may include one CU and a plurality of PUs (such as a PU 1 - a PU n shown in the figure). The CU may control the plurality of PUs by using a control line, and perform voltage transformation on an input electrical signal, to provide, by using a power line shown in the figure, each PA in the 5G base station on the power supply side with an electrical signal that matches a requirement (for example, a requirement for a supply voltage and a requirement for supply power) of the PA. It should be noted that, as described above, a component that is in the 5G base station and that is used as a load may not be limited to a PA, and may further include another component that needs to be powered, such as an FPGA or an antenna switch. That the PA is a load is merely used as an example for description herein. As shown in FIG. 16, in some implementations, the CU may further implement electrical connection to the powered system by using a communication line. The communication line is used for communication between the CU and the powered system. For example, the CU may indicate, by using the communication line, the powered system to perform power derating. For another example, the CU may receive, by using the communication line, current required power reported by the powered system, or the like.

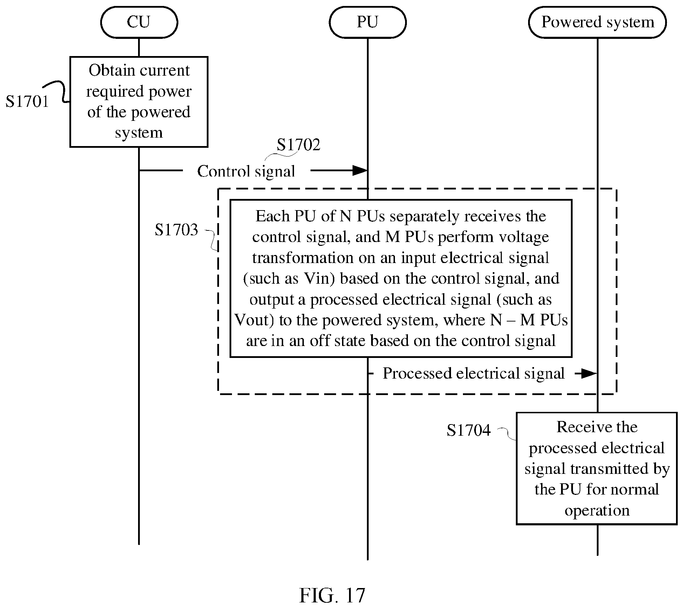

Based on FIG. 16, FIG. 17 is a schematic flowchart of a power supply method according to an embodiment of this application. As shown in FIG. 17, the method may include S1701 to S1704.

S1701: A CU obtains current required power of a powered system.

S1702: The CU sends a control signal to each PU of N PUs based on the current required power.

S1703: Each PU of the N PUs separately receives the control signal, and M PUs perform voltage transformation on an input electrical signal (such as Vin) based on the control signal, and output a processed electrical signal (such as Vout) to the powered system. N - M PUs are in an off state based on the control signal.

S1704: The powered system receives the processed electrical signal transmitted by the PU, to perform normal operation.

A specific execution method and a possible implementation are described in detail in the foregoing description, and details are not described herein again.

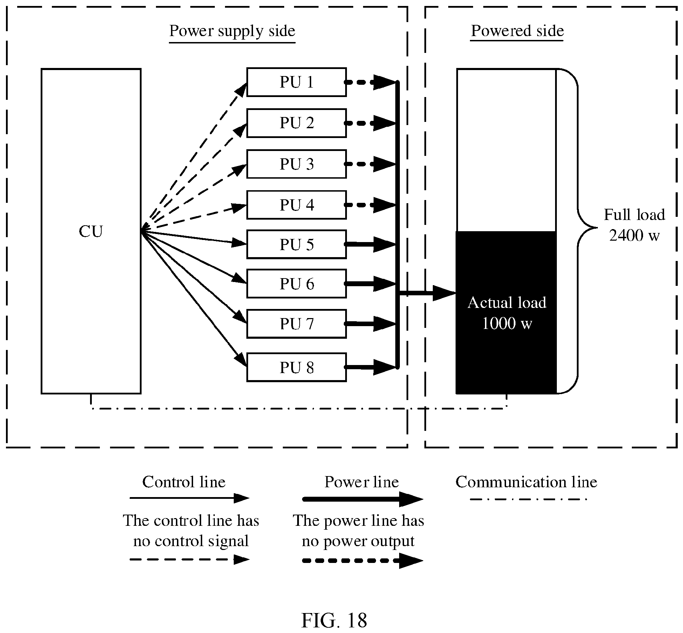

In a logical architecture shown in FIG. 16, by using the power supply method shown in FIG. 17, highly efficient and energy-saving power supply output to the powered system, such as the 5G base station, can be effectively realized. When the powered system is in a partial load state, refer to FIG. 18 for an example of power supply to the powered system. For example, a full load of a powered system is 2400 w, power that can be output by each PU is 300 w, and power feeding equipment includes eight PUs in total. As shown in FIG. 18, when current required power of the powered system is 1000 w (that is, an actual load is 1000 w), the CU may control to turn off four PUs, and turn on only four PUs for power supply output. For example, the CU may control a PU 1 to a PU 4 to be in an off state by using a dashed-line control line, and the PU 1 to the PU 4 do not output power to the powered system. The CU may control a PU 5 to a PU 8 to be in an operating state by using a solid-line control line in the figure, so that the PU 5 to the PU 8 can provide maximum power of 1200 w to the powered system, which can meet operation of the actual load of the powered system. Therefore, a PU in the operating state is prevented from operating in a low-load state, thus improving power supply efficiency of the PU. In addition, power consumption of a PU that does not operate is reduced.

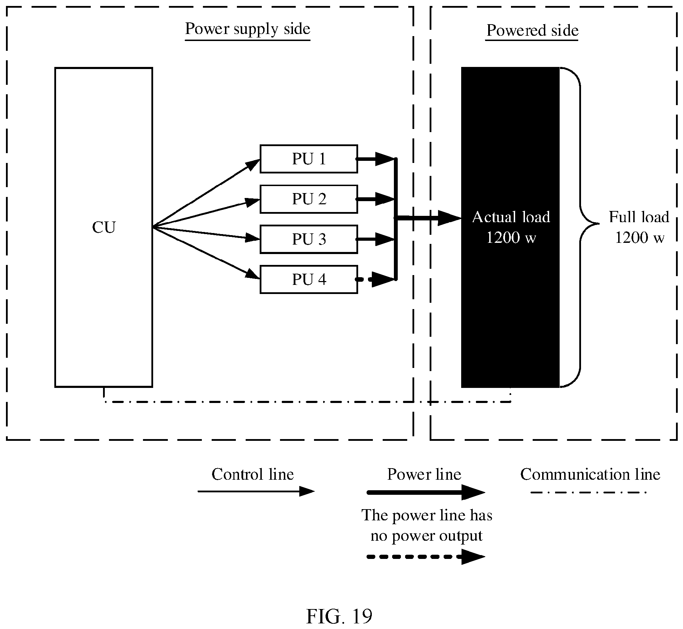

Embodiments of this application also provide different solutions to cope with a possible PU failure. For example, in some implementations, the CU may reduce impact of the PU failure on operation of a powered system by indicating the powered system on a powered side to perform power derating. FIG. 19 is a schematic diagram of another power supply scenario according to an embodiment of this application. For example, a full load of a powered system is 1200 w, power that can be output by each PU is 300 w, power feeding equipment includes four PUs, and the powered system is in a full-load operating state, that is, an actual load is 1200 w. A CU can control all the four PUs, such as a PU 1 to a PU 4, to turn on for power supply output. When the PU 4 fails and a control signal passes through a corresponding control line, no output power is output from a power line. In this case, the CU may deliver a power derating instruction to a powered system on a powered side by using a communication line, so that the powered system performs corresponding derating based on the instruction. It may be understood that, when the powered system operates, a load that needs to operate and a load that is unnecessary may be included. After the power derating instruction is received, the powered system may temporarily turn off the unnecessary load, so that a power off situation does not occur due to a PU 4 failure while a basic function of the powered system is ensured.

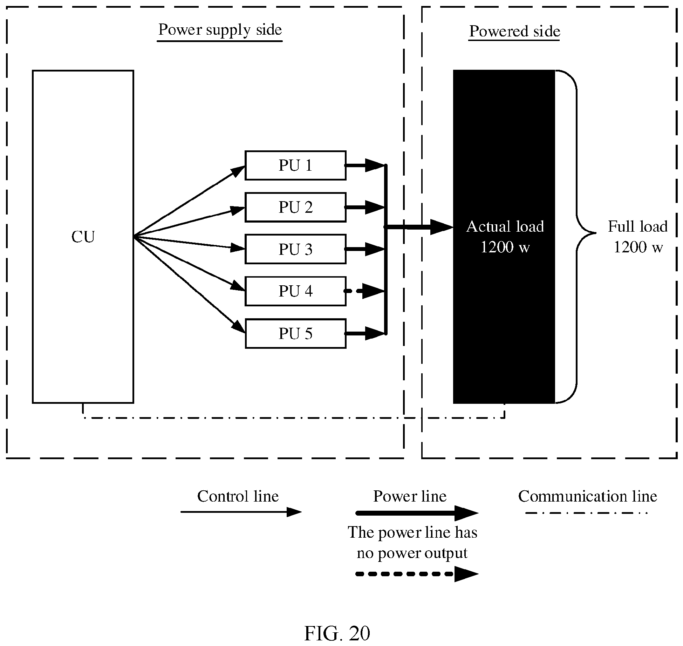

In some other implementations, the CU may turn on a backup power supply unit to perform power supply output to the powered system on the powered side, to compensate for a problem of insufficient supply power due to the PU failure. FIG. 20 is a schematic diagram of another power supply scenario according to an embodiment of this application. For example, a full load of a powered system is 1200 w, power that can be output by each PU is 300 w, and power feeding equipment includes four PUs and one backup PU. The backup PU may also be referred to as a 1/4 backup power supply unit, and the power feeding equipment may also be referred to as a 4+1 power feeding equipment. As shown in FIG. 20, the powered system is in a full-load operating state, to be specific, an actual load is 1200 w. Then, a CU can control all the four PUs, such as a PU 1 to a PU 4, to turn on for power supply output. When the PU 4 fails and a control signal passes through a corresponding control line, no output power is output from a power line. In this case, the CU may control, by using a control line, a backup power unit (namely, a PU 5) to start to perform power supply output to a powered system on a powered side, to compensate for a problem of insufficient power output due to inability of the PU 4 to perform power supply output. Therefore, it is ensured that the power feeding equipment can provide sufficient power for the powered system on the powered side to ensure normal operation of the power feeding equipment.

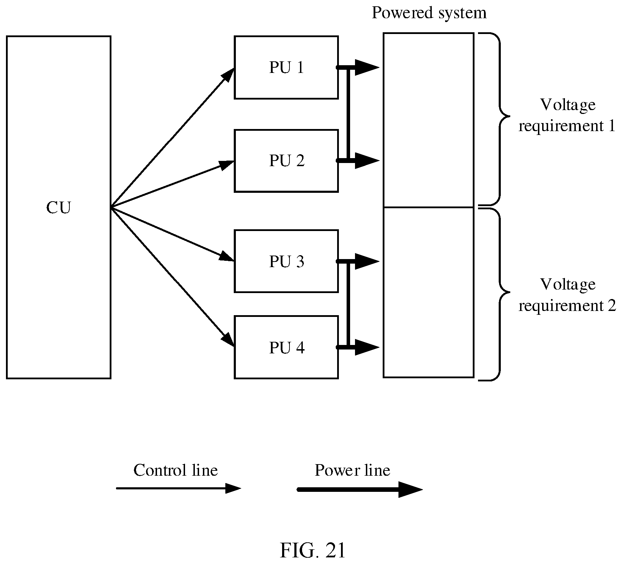

The power feeding equipment provided in this embodiment of this application can control a plurality of PUs by using one CU. Board-level flexible power supply deployment can be implemented and can be applied to different power supply scenarios. For example, in some embodiments, when a plurality of different voltages are required by the powered system, multi-output independent power supply may be used. For example, the powered system includes two different voltage requirements (for example, a voltage requirement 1 and a voltage requirement 2), and a total of four PUs (for example, a PU 1, a PU 2, a PU 3, and a PU 4) are disposed in the power feeding equipment. As shown in FIG. 21, the PU 1 and the PU 2 may be allocated to a powered system with the voltage requirement 1. For example, outputs of the PU 1 and the PU 2 are connected to provide a corresponding power supply signal for the powered system. In an example, the CU may separately send control information 1 to the PU 1 and the PU 2, to control the PU 1 and the PU 2 to adjust a supply voltage to a voltage that matches the voltage requirement 1, and supply power to a part with the voltage requirement 1 in the powered system. Similarly, the PU 3 and the PU 4 may be allocated to the powered system with the voltage requirement 2. For example, outputs of the PU 3 and the PU 4 are connected to provide a corresponding power supply signal for the powered system. In an example, the CU may separately send control information 2 to the PU 3 and the PU 4, to control the PU 3 and the PU 4 to adjust a supply voltage to a voltage that matches the voltage requirement 1, and supply power to a part with the voltage requirement 2 in the powered system. In this way, an objective of supplying power to the powered system by outputting different supply voltages is implemented.

It should be noted that in the example, PU branches with a same output voltage are connected for output, which can provide the powered system with a power supply signal that matches a requirement of the powered system, so that the powered system can allocate the power supply signal by itself based on power requirements of different loads. In some other implementations, the PU branches with the same output voltage may not be connected, but separately output a power supply signal to the powered system. This is not limited in this embodiment of this application. In addition, in the example, that the output power of the power feeding equipment is equally allocated to two powered system loads with different required voltages is used as an example. In an actual implementation process, PU allocation may be flexibly determined based on a power requirement of a load in each voltage requirement. For example, more PUs are allocated to a part with a relatively large power requirement, and fewer PUs are allocated to a part with a relatively small power requirement. A specific quantity of PUs may be flexibly configured, and details are not described herein.

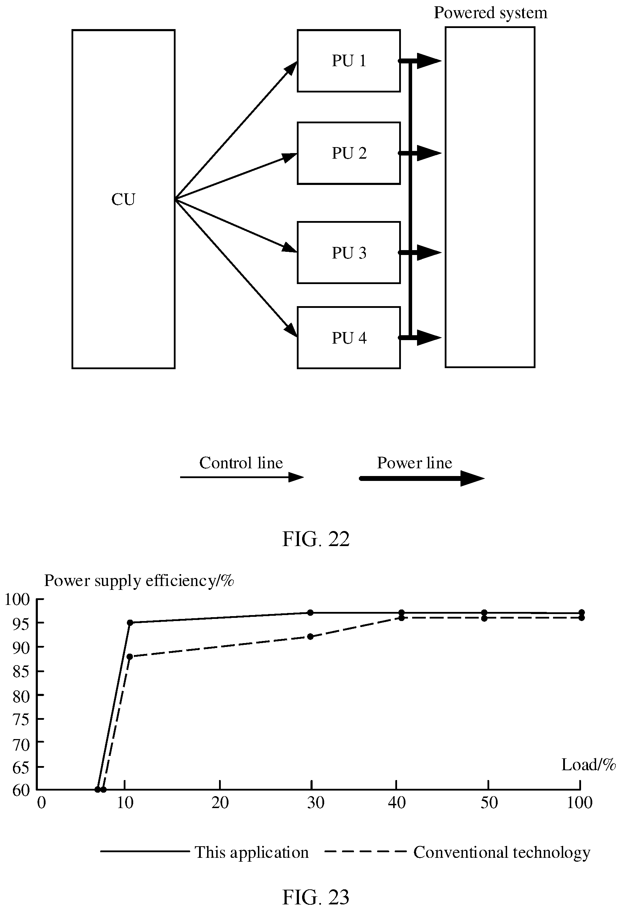

In some other embodiments, when required voltages of different loads in a powered system are the same, output combined power supply may be used. For example, a total of four PUs (for example, a PU 1, a PU 2, a PU 3, and a PU 4) are disposed in the power feeding equipment. As shown in FIG. 22, outputs of the PU 1 to the PU 4 may be connected to provide a corresponding power supply signal for the powered system. In an example, a CU may separately send control information 3 to the PU 1 to the PU 4, to control the PU 1 to the PU 4 to adjust a supply voltage to a state that matches the required voltage of the powered system, and supply power to the powered system. Similar to the foregoing description in the multi-output independent power supply, the outputs of the PU 1 to the PU 4 may not be connected to each other. This is not limited in this embodiment of this application.

Based on the example, it can be learned that, the power feeding equipment provided in this embodiment of this application controls one or more PUs by using one CU, and flexibly adjusts an operating state of each PU based on current required power of the powered system, which can effectively improve power supply efficiency, and also improve power supply stability and service life of the system to some extent. Further, by disposing a backup power unit and/or sending a power derating indication to the powered system, a problem of insufficient power output caused by a PU failure can be effectively dealt with in time, to ensure normal operation of the powered system.

It has been verified by a large number of experiments that, on the basis of the foregoing power feeding equipment, the powered system is powered by using the power supply method provided in this embodiment of this application. Compared with a conventional technology, power supply efficiency can be significantly improved. A comparison result is shown in FIG. 23. As shown in FIG. 23, in different load states, efficiency of power supply by the power supply method provided by the embodiments of this application is significantly higher than that of the conventional technology. Especially in a light-load state, the power supply efficiency is particularly advantageous. Therefore, the technical solutions provided in the embodiments of this application are significantly better than those in the conventional technology.

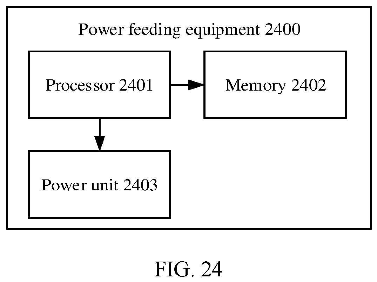

FIG. 24 is a schematic composition diagram of another power feeding equipment 2400 according to an embodiment of this application. The power feeding equipment 2400 may include a processor 2401, a memory 2402, and a power unit 2403. The memory 2402 is configured to store computer-executable instructions. For example, in some embodiments, when the processor 2401 executes the instructions stored in the memory 2402, the data transmission apparatus 2400 may execute S1701 to S1704 shown in FIG. 17 and another operation that needs to be performed by the power feeding equipment in the foregoing embodiments. For example, the processor 2401 may control the power unit 2403 based on the read instructions to perform flexible power supply output. It should be noted that all related content of the steps in the foregoing method embodiments may be cited in function description of corresponding functional modules. Details are not described herein again.

Although this application is described with reference to specific features and the embodiments thereof, it is clear that various modifications and combinations may be made to them without departing from the scope of this application. Correspondingly, the specification and the accompanying drawings are merely example descriptions of this application, and are intended to cover any of or all modifications, variations, combinations, or equivalents within the scope of this application. Clearly, a person skilled in the art can make various modifications and variations to this application without departing from the scope of this application. This application is intended to cover these modifications and variations of this application provided wherein the scope of the invention is defined by the appended claims.

## Claims

1. Power feeding equipment (310), comprising a power interface (301), a control unit (302), and N first power units (303), wherein N is an integer greater than 1;
the power interface (301) is coupled to a power supply input of each of the N first power units (303), and a power supply output of each of the N first power units (303) is coupled to a power supply input of a powered system;
a control terminal of the control unit (302) is coupled to a control terminal of each of the N first power units (303), and output power of the N first power units (303) is greater than or equal to maximum required power of the powered system; and
in a state in which the power interface (301) is connected to a power supply, the control unit (302) is configured to: obtain current required power of the powered system; control, by using the control terminal of the control unit (302) based on the current required power of the powered system, M first power units of the N first power units (303) to supply power to the powered system; and control N - M first power units to be in an off state, wherein output power of the M first power units is greater than or equal to the current required power of the powered system, and M is an integer greater than or equal to 1, and less than or equal to N,
wherein a communication interface of the control unit (302) is coupled to a communication interface of the powered system; and
**characterised by** wherein
the control unit (302) is further configured to: when there is a failed power unit in the M first power units, send a failure message to the powered system by using the communication interface of the control unit, to indicate the powered system to perform power derating.

2. The equipment according to claim 1, wherein the control unit (302) is configured to obtain power of the powered system comprises:
the control unit (302) is configured to receive the current required power from the powered system by using the communication interface of the control unit.

3. The equipment according to claim 1, wherein
that the control unit (302) is configured to obtain the current required power of the powered system comprises:
the control unit (302) is configured to monitor output power of a power supply output of each of the N first power units (303), and determine the current required power of the powered system based on the monitored output power.

4. The equipment according to any one of claims 1 to 3, wherein the power feeding equipment further comprises a second power unit;
a power supply input of the second power unit is coupled to the power interface, and a power supply output of the second power unit is coupled to the power supply input of the powered system; and a control terminal of the second power unit is coupled to the control terminal of the control unit; and
the control unit (302) is further configured to: when there is a failed power unit in the M first power units, control, by using the control terminal of the control unit, the second power unit to supply power to the powered system.

5. The equipment according to any one of claims 1 to 4, wherein the first power unit comprises a transformer module;
an input of the transformer module is the power supply input of the first power unit, an output of the transformer module is the power supply output of the first power unit, and a control terminal of the transformer module is the control terminal of the first power unit; and
that the control unit (302) is configured to control, by using the control terminal of the control unit, M first power units of the N first power units (303) to supply power to the powered system comprises:
for each of the M first power units, the control unit (302) is configured to send a control signal to the first power unit by using the control terminal of the control unit; and
the first power unit is configured to perform, by using the transformer module based on the control signal, voltage transformation on an electrical signal input from the power interface, so that the first power unit supplies power to the powered system.

6. The equipment according to any one of claims 1 to 4, wherein the first power unit comprises a transformer module and a driver module, an input of the transformer module is the power supply input of the first power unit, an output of the transformer module is the power supply output of the first power unit, a control terminal of the transformer module is coupled to an output of the driver module, and an input of the driver module is the control terminal of the first power unit; and
that the control unit (302) is configured to control, by using the control terminal of the control unit, M first power units of the N first power units (303) to supply power to the powered system comprises:
for each of the M first power units,
the control unit (302) is configured to send a control signal to the driver module of the first power unit by using the control terminal of the control unit; and
the first power unit is configured to control, by using the driver module based on the control signal, the transformer module to perform voltage transformation on an electrical signal input from the power interface, to supply power to the powered system.

7. A power supply method, applied to power feeding equipment comprising N first power units (303), wherein N is an integer greater than 1; and the method comprises:
in a state in which the power feeding equipment is connected to a power supply, obtaining (S1701), by the power feeding equipment, current required power of a powered system; controlling M first power units of the N first power units (303) based on the current required power of the powered system to supply power to the powered system; and controlling (S1703) N - M first power units to be in an off state, wherein output power of the M first power units is greater than or equal to the current required power of the powered system, and M is an integer greater than or equal to 1, and less than or equal to N,
wherein the method is **characterised by** further comprising:
when there is a failed power unit in the M first power units, sending, by the power feeding equipment, a failure message to the powered system, to indicate the powered system to perform power derating.

8. The method according to claim 7, wherein the obtaining, by the power feeding equipment, current required power of a powered system comprises:
receiving, by the power feeding equipment, the current required power from the powered system.

9. The method according to claim 7, wherein the obtaining, by the power feeding equipment, current required power of a powered system comprises:
monitoring, by the power feeding equipment, output power of each of the N first power units (303), and determining the current required power of the powered system based on the monitored output power.

10. The method according to any one of claims 7 to 9, wherein the power feeding equipment further comprises a second power unit; and the method further comprises:
when there is a failed power unit in the M first power units, controlling, by the power feeding equipment, the second power unit to supply power to the powered system.

## Patentansprüche

1. Stromeinspeiseeinrichtung (310), die eine Stromschnittstelle (301), eine Steuereinheit (302) und N erste Stromversorgungseinheiten (303) umfasst, wobei N eine ganze Zahl größer als 1 ist;
wobei die Leistungsschnittstelle (301) mit einem Stromversorgungseingang von jeder der N ersten Stromversorgungseinheiten (303) gekoppelt ist, und wobei ein Stromversorgungsausgang von jeder der N ersten Stromversorgungseinheiten (303) mit einem Stromversorgungseingang eines mit Strom betriebenen Systems gekoppelt ist;
wobei eine Steuerklemme der Steuereinheit (302) mit einer Steuerklemme von jeder der N ersten Stromversorgungseinheiten (303) gekoppelt ist, und wobei ein Ausgangsstrom von jeder der N ersten Stromversorgungseinheiten (303) größer als oder gleich einem Strom ist, der für das mit Strom betriebene System maximal erforderlich ist; und
wobei die Steuereinheit (302) in einem Zustand, in dem die Stromschnittstelle (301) mit einer Stromversorgung verbunden ist, konfiguriert ist zum: Erhalten eines Stroms, der für das mit Strom betriebene System aktuell erforderlich ist; Steuern, indem die Steuerklemme der Steuereinheit (302) basierend auf dem Strom, der für das mit Strom betriebene System aktuell erforderlich ist, verwendet wird, von M ersten Stromversorgungseinheiten der N ersten Stromversorgungseinheiten (303), um das mit Strom betriebene System mit Strom zu versorgen; und Steuern, dass sich N - M erste Stromversorgungseinheiten in einem ausgeschalteten Zustand befinden, wobei der Ausgangsstrom der M ersten Stromversorgungseinheiten größer als oder gleich dem Strom ist, der für das mit Strom betriebene System aktuell erforderlich ist, und wobei M eine ganze Zahl größer als oder gleich 1 und kleiner als oder gleich N ist,
wobei eine Kommunikationsschnittstelle der Steuereinheit (302) mit einer Kommunikationsschnittstelle des mit Strom betriebenen Systems gekoppelt ist; und **dadurch gekennzeichnet, dass**
die Steuereinheit (302) außerdem konfiguriert ist zum: wenn in den M ersten Stromversorgungseinheiten eine fehlerhafte Stromversorgungseinheit vorhanden ist, Senden einer Fehlernachricht an das mit Strom betriebene System, indem die Kommunikationsschnittstelle der Steuereinheit verwendet wird, um das mit Strom betriebene System anzuweisen, eine Drosselung des Stromverbrauchs durchzuführen.

2. Einrichtung nach Anspruch 1, wobei die Steuereinheit (302) konfiguriert ist zum Erhalten eines Stroms, der für das mit Strom betriebene System erforderlich ist, umfasst:
dass die Steuereinheit (302) konfiguriert ist zum Empfangen des Stroms, der aktuell erforderlich ist, von dem mit Strom betriebenen System, indem die Kommunikationsschnittstelle der Steuereinheit verwendet wird.

3. Einrichtung nach Anspruch 1, wobei
die Tatsache, dass die Steuereinheit (302) konfiguriert ist zum Erhalten des Stroms, der für das mit Strom betriebene System aktuell erforderlich ist, umfasst:
dass die Steuereinheit (302) konfiguriert ist zum Überwachen eines Ausgangsstroms eines Stromversorgungsausgangs von jeder der N ersten Stromversorgungseinheiten (303), und Ermitteln, basierend auf dem überwachten Ausgangsstrom, des Stroms, der für das mit Strom betriebene System aktuell erforderlich ist.

4. Einrichtung nach einem der Ansprüche 1 bis 3, wobei die Stromeinspeiseeinrichtung außerdem eine zweite Stromversorgungseinheit umfasst;
wobei ein Stromversorgungseingang der zweiten Stromversorgungseinheit mit der Stromschnittstelle gekoppelt ist, und wobei ein Stromversorgungsausgang der zweiten Stromversorgungseinheit mit dem Stromversorgungseingang des mit Strom betriebenen Systems gekoppelt ist; und wobei eine Steuerklemme der zweiten Stromversorgungseinheit mit der Steuerklemme der Steuereinheit gekoppelt ist; und wobei die Steuereinheit (302) außerdem konfiguriert ist zum: wenn in den M ersten Stromversorgungseinheiten eine fehlerhafte Stromversorgungseinheit vorhanden ist, Steuern, indem die Steuerklemme der Steuereinheit verwendet wird, der zweiten Stromversorgungseinheit, um das mit Strom betriebene System mit Strom zu versorgen.

5. Einrichtung nach einem der Ansprüche 1 bis 4, wobei die erste Stromversorgungseinheit ein Transformatormodul umfasst;
wobei ein Eingang des Transformatormoduls der Stromversorgungseingang der ersten Stromversorgungseinheit ist, wobei ein Ausgang des Transformatormoduls der Stromversorgungsausgang der ersten Stromversorgungseinheit ist, und wobei eine Steuerklemme des Transformatormoduls die Steuerklemme der ersten Stromversorgungseinheit ist; und
wobei die Tatsache, dass die Steuereinheit (302) konfiguriert ist zum Steuern, indem die Steuerklemme der Steuereinheit verwendet wird, von M ersten Stromversorgungseinheiten der N ersten Stromversorgungseinheiten (303), um das mit Strom betriebene System mit Strom zu versorgen, umfasst:
dass, für jede der M ersten Stromversorgungseinheiten, die Steuereinheit (302) konfiguriert ist zum Senden eines Steuersignals an die erste Stromversorgungseinheit, indem die Steuerklemme der Steuereinheit verwendet wird; und
dass die erste Stromversorgungseinheit konfiguriert ist zum Durchführen, indem das Transformatormodul basierend auf dem Steuersignal verwendet wird, einer Spannungstransformation an einem elektrischen Signaleingang von der Stromschnittstelle, sodass die erste Stromversorgungseinheit das mit Strom betriebene System mit Strom versorgt.

6. Einrichtung nach einem der Ansprüche 1 bis 4, wobei die erste Stromversorgungseinheit ein Transformatormodul und ein Treibermodul umfasst, wobei ein Eingang des Transformatormoduls der Stromversorgungseingang der ersten Stromversorgungseinheit ist, wobei ein Ausgang des Transformatormoduls der Stromversorgungsausgang der ersten Stromversorgungseinheit ist, eine Steuerklemme des Transformatormoduls mit einem Ausgang des Treibermoduls gekoppelt ist, und wobei ein Eingang des Treibermoduls die Steuerklemme der ersten Stromversorgungseinheit ist; und
wobei die Tatsache, dass die Steuereinheit (302) konfiguriert ist zum Steuern, indem die Steuerklemme der Steuereinheit verwendet wird, von M ersten Stromversorgungseinheiten der N ersten Stromversorgungseinheiten (303), um das mit Strom betriebene System mit Strom zu versorgen, umfasst:
für jede der M ersten Stromversorgungseinheiten:
dass die Steuereinheit (302) konfiguriert ist zum Senden eines Steuersignals an das Treibermodul der ersten Stromversorgungseinheit, indem die Steuerklemme der Steuereinheit verwendet wird; und
dass die erste Stromversorgungseinheit konfiguriert ist zum Steuern, indem das Treibermodul basierend auf dem Steuersignal verwendet wird, des Transformatormoduls, um eine Spannungstransformation an einem elektrischen Signaleingang von der Stromschnittstelle durchzuführen, um das mit Strom betriebene System mit Strom zu versorgen.

7. Stromversorgungsverfahren, das in einer Stromeinspeiseeinrichtung angewandt wird, die N erste Stromversorgungseinheiten (303) umfasst, wobei N eine ganze Zahl größer als 1 ist; und wobei das Verfahren umfasst:
in einem Zustand, in dem die Stromeinspeiseeinrichtung mit einer Stromversorgung verbunden ist, Erhalten (S1701), durch die Stromeinspeiseeinrichtung, eines Stroms, der für das mit Strom betriebene System aktuell erforderlich ist; Steuern von M ersten Stromversorgungseinheiten der N ersten Stromversorgungseinheiten (303) basierend auf dem Strom, der für das mit Strom betriebene System aktuell erforderlich ist, um das mit Strom betriebene System mit Strom zu versorgen; und Steuern (S1703), dass sich N - M erste Stromversorgungseinheiten in einem ausgeschalteten Zustand befinden, wobei ein Ausgangsstrom der M ersten Stromversorgungseinheiten größer als oder gleich dem Strom ist, der für das mit Strom betriebene System aktuell erforderlich ist, und wobei M eine ganze Zahl größer als oder gleich 1 und kleiner als oder gleich N ist,
wobei das Verfahren **dadurch gekennzeichnet ist, dass** es außerdem umfasst:
wenn in den M ersten Stromversorgungseinheiten eine fehlerhafte Stromversorgungseinheit vorhanden ist, Senden einer Fehlernachricht von der Stromeinspeiseeinrichtung an das mit Strom betriebene System, um das mit Strom betriebene System anzuweisen, eine Drosselung des Stromverbrauchs durchzuführen.

8. Verfahren nach Anspruch 7, wobei das Erhalten, durch die Stromeinspeiseeinrichtung, eines Stroms, der für das mit Strom betriebene System aktuell erforderlich ist, umfasst: Empfangen, in der Stromeinspeiseeinrichtung, des Stroms, der für das mit Strom betriebene System aktuell erforderlich ist.

9. Verfahren nach Anspruch 7, wobei das Erhalten, durch die Stromeinspeiseeinrichtung, eines Stroms, der für das mit Strom betriebene System aktuell erforderlich ist, umfasst: Überwachen, durch die Stromeinspeiseeinrichtung, eines Ausgangsstroms von jedem der N ersten Stromversorgungseinheiten (303), und Ermitteln, basierend auf dem überwachten Ausgangsstrom, des Stroms, der für das mit Strom betriebene System aktuell erforderlich ist.

10. Verfahren nach einem der Ansprüche 7 bis 9, wobei die Stromeinspeiseeinrichtung außerdem eine zweite Stromversorgungseinheit umfasst; und wobei das Verfahren außerdem umfasst:
wenn in den M ersten Stromversorgungseinheiten eine fehlerhafte Stromversorgungseinheit vorhanden ist, Steuern, durch die Stromeinspeiseeinrichtung, dass die zweite Stromversorgungseinheit das mit Strom betriebene System mit Strom versorgt.

## Revendications

1. Équipement d'alimentation électrique (310), comprenant une interface d'alimentation (301), une unité de commande (302), et N premières unités d'alimentation (303), N étant un entier supérieur à 1 ;
l'interface d'alimentation (301) étant couplée à une entrée d'alimentation électrique de chacune des N premières unités d'alimentation (303), et une sortie d'alimentation électrique de chacune des N premières unités d'alimentation (303) étant couplée à une entrée d'alimentation électrique d'un système alimenté ;
une borne de commande de l'unité de commande (302) étant couplée à une borne de commande de chacune des N premières unités d'alimentation (303), et l'énergie de sortie des N premières unités d'alimentation (303) étant supérieure ou égale à l'énergie maximale requise du système alimenté ; et
dans un état dans lequel l'interface d'alimentation (301) est connectée à une alimentation électrique, l'unité de commande (302) étant configurée pour : obtenir l'énergie actuellement requise du système alimenté ; commander, en utilisant la borne de commande de l'unité de commande (302) sur la base de l'énergie actuellement requise du système alimenté, M premières unités d'alimentation des N premières unités d'alimentation (303) pour alimenter en énergie le système alimenté ; et commander N - M premières unités d'alimentation pour être dans un état désactivé, l'énergie de sortie des M premières unités d'alimentation étant supérieure ou égale à l'énergie actuellement requise du système alimenté, et M étant un entier supérieur ou égal à 1, et inférieur ou égal à N,
une interface de communication de l'unité de commande (302) étant couplée à une interface de communication du système alimenté ; et
**caractérisé en ce que** l'unité de commande (302) est en outre configurée pour : lorsqu'il y a une unité d'alimentation défaillante dans les M premières unités d'alimentation, envoyer un message de défaillance au système alimenté en utilisant l'interface de communication de l'unité de commande pour indiquer au système alimenté d'effectuer une réduction d'énergie.

2. Équipement selon la revendication 1, l'unité de commande (302) étant configurée pour obtenir l'énergie du système alimenté, comprenant :
l'unité de commande (302) étant configurée pour recevoir l'énergie actuellement requise du système alimenté en utilisant l'interface de communication de l'unité de commande.

3. Équipement selon la revendication 1,
l'unité de commande (302) étant configurée pour obtenir l'énergie actuellement requise du système alimenté, comprenant :
l'unité de commande (302) étant configurée pour surveiller l'énergie de sortie d'une sortie d'alimentation électrique de chacune des N premières unités d'alimentation (303), et déterminer l'énergie actuellement requise du système alimenté sur la base de l'énergie de sortie surveillée.

4. Équipement selon l'une quelconque des revendications 1 à 3, l'équipement d'alimentation électrique comprenant en outre une seconde unité d'alimentation ;
une entrée d'alimentation électrique de la seconde unité d'alimentation étant couplée à l'interface d'alimentation, et une sortie d'alimentation électrique de la seconde unité d'alimentation étant couplée à l'entrée d'alimentation électrique du système alimenté ; et une borne de commande de la seconde unité d'alimentation étant couplée à la borne de commande de l'unité de commande ; et
l'unité de commande (302) étant en outre configurée pour : lorsqu'il y a une unité d'alimentation défaillante dans les M premières unités d'alimentation, commander, en utilisant la borne de commande de l'unité de commande, la seconde unité d'alimentation pour alimenter en énergie le système alimenté.

5. Équipement selon l'une quelconque des revendications 1 à 4, la première unité d'alimentation comprenant un module transformateur ;
une entrée du module transformateur étant l'entrée d'alimentation électrique de la première unité d'alimentation, une sortie du module transformateur étant la sortie d'alimentation électrique de la première unité d'alimentation, et une borne de commande du module transformateur étant la borne de commande de la première unité d'alimentation ; et
l'unité de commande (302) étant configurée pour commander, en utilisant la borne de commande de l'unité de commande, M premières unités d'alimentation des N premières unités d'alimentation (303) pour alimenter en énergie le système alimenté, comprenant :
pour chacune des M premières unités d'alimentation, l'unité de commande (302) étant configurée pour envoyer un signal de commande à la première unité d'alimentation en utilisant la borne de commande de l'unité de commande ; et
la première unité d'alimentation étant configurée pour effectuer, en utilisant le module transformateur sur la base du signal de commande, une transformation de tension sur un signal électrique reçu de l'interface d'alimentation, de sorte que la première unité d'alimentation alimente en énergie le système alimenté.

6. Équipement selon l'une quelconque des revendications 1 à 4, la première unité d'alimentation comprenant un module transformateur et un module de pilotage, une entrée du module transformateur étant l'entrée d'alimentation électrique de la première unité d'alimentation, une sortie du module transformateur étant la sortie d'alimentation électrique de la première unité d'alimentation, une borne de commande du module transformateur étant couplée à une sortie du module de pilotage, et une entrée du module de pilotage étant la borne de commande de la première unité d'alimentation ; et
l'unité de commande (302) étant configurée pour commander, en utilisant la borne de commande de l'unité de commande, M premières unités d'alimentation des N premières unités d'alimentation (303) pour alimenter en énergie le système alimenté, comprenant :
pour chacune des M premières unités d'alimentation,
l'unité de commande (302) étant configurée pour envoyer un signal de commande au module de pilotage de la première unité d'alimentation en utilisant la borne de commande de l'unité de commande ; et
la première unité d'alimentation étant configurée pour commander, en utilisant le module de pilotage sur la base du signal de commande, le module transformateur pour effectuer une transformation de tension sur un signal électrique reçu de l'interface d'alimentation, pour alimenter en énergie le système alimenté.

7. Procédé d'alimentation électrique, appliqué à un équipement d'alimentation électrique comprenant N premières unités d'alimentation (303), N étant un entier supérieur à 1 ; et le procédé comprenant :
dans un état dans lequel l'équipement d'alimentation électrique est connecté à une alimentation électrique, l'obtention (S1701), par l'équipement d'alimentation électrique, de l'énergie actuellement requise d'un système alimenté ; la commande de M premières unités d'alimentation des N premières unités d'alimentation (303) sur la base de l'énergie actuellement requise du système alimenté pour alimenter en énergie le système alimenté ; et la commande (S1703) de N - M premières unités d'alimentation pour être dans un état désactivé, l'énergie de sortie des M premières unités d'alimentation étant supérieure ou égale à l'énergie actuellement requise du système alimenté, et M étant un entier supérieur ou égal à 1, et inférieur ou égal à N, le procédé étant **caractérisé en ce qu'**il comprend en outre :
lorsqu'il y a une unité d'alimentation défaillante dans les M premières unités d'alimentation, l'envoi, par l'équipement d'alimentation électrique, d'un message de défaillance au système alimenté, pour indiquer au système alimenté d'effectuer une réduction d'énergie.

8. Procédé selon la revendication 7, l'obtention, par l'équipement d'alimentation électrique, de l'énergie actuellement requise d'un système alimenté comprenant :
la réception, par l'équipement d'alimentation électrique, de l'énergie actuellement requise du système alimenté.

9. Procédé selon la revendication 7, l'obtention, par l'équipement d'alimentation électrique, de l'énergie actuellement requise d'un système alimenté comprenant :
la surveillance, par l'équipement d'alimentation électrique, de l'énergie de sortie de chacune des N premières unités d'alimentation (303), et la détermination de l'énergie actuellement requise du système alimenté sur la base de l'énergie de sortie surveillée.

10. Procédé selon l'une quelconque des revendications 7 à 9, l'équipement d'alimentation électrique comprenant en outre une seconde unité d'alimentation ; et le procédé comprenant en outre :
lorsqu'il y a une unité d'alimentation défaillante dans les M premières unités d'alimentation, la commande, par l'équipement d'alimentation électrique, de la seconde unité d'alimentation pour alimenter en énergie le système alimenté.
